# FASCICULE DE BREVET EUROPEEN

(11) **EP 0 786 124 B1**
(45) Date de publication et mention de la délivrance du brevet: **01.03.2006**
(21) Numéro de dépôt: 95934692.5
(22) Date de dépôt: 12.10.1995
(51) Int. Cl.: G07F 17/30, G11B 27/00

(54) **SYSTEME DE REPRODUCTION AUDIOVISUELLE NUMERIQUE INTELLIGENT**
NUMERISCHES, INTELLIGENTES, AUDIOVISUELLES REPRODUKTIONSSYSTEM
INTELLIGENT DIGITAL AUDIOVISUAL PLAYBACK SYSTEM

(30) Priorité: 12.10.1994 WO PCT/FR94/01185
(43) Date de publication de la demande: 30.07.1997
(73) Titulaire: TOUCHTUNES MUSIC CORPORATION, Las Vegas, NV 89104 (US)
(72) Inventeur: NATHAN, Guy, F-91330 Yerres (FR); MASTRONARDI, Tony, Pierrefonds, Québec H8Y 3L2 (CA)
(74) Mandataire: Debay, Yves
(86) Numéro de dépôt international: PCT/FR1995/001335
(87) Numéro de publication internationale: WO 1996/012258

(56) Documents cités:
- WO-A-93/18465
- US-A- 4 677 565
- US-A- 5 237 157

## Description

La présente invention concerne un système de reproduction audiovisuelle déclenché par paiement de redevances.

De tels systèmes de reproduction audiovisuelle sont généralement rencontrés dans des cafés ou dans des pubs. Ce type de système est en fait constitué d'une machine de reproduction sonore appelée ordinairement juke-box associée à un moniteur assurant la visualisation d'images vidéo ou de clips vidéo. Pour cela, le juke-box est équipé d'un lecteur de disques compacts vidéo et d'une discothèque de disques compacts vidéo et comporte des boutons de présélection repérant les titres des morceaux de musique qu'il est proposé de choisir. Le paiement d'une redevance adéquate suivi d'une ou plusieurs présélections autorise le déclenchement du système avec le chargement automatique, dans le lecteur, du disque sur lequel figure le morceau choisi, la reproduction audiovisuelle désirée pouvant alors commencer.

Ces systèmes, bien que permettant une reproduction fidèle et de bonne qualité, présentent néanmoins de sérieux inconvénients. Ainsi, un premier inconvénient est relatif au volume nécessaire pour le stockage de la discothèque, ce qui implique, en conséquence, que le système soit de dimensions importantes et donc encombrant. Egalement, ces systèmes qui font appel à un matériel surtout mécanique utilisant des techniques sophistiquées présentent des taux de pannes significatifs, ce qui est un autre inconvénient. Enfin, il est très rare que tous les morceaux d'un disque soient régulièrement écoutés, certains même ne le sont quasiment jamais mais ne peuvent cependant pas pour autant être éliminés. Outre cet inconvénient, l'inconvénient suivant est présenté du fait que les sociétés gérant et distribuant ces systèmes mettent dans le circuit un nombre limité de disques identiques et imposent une certaine rotation chez leurs clients, ce qui implique parfois pour ces derniers une attente désagréable lorsqu'un disque n'est pas disponible.

Par ailleurs, il est connu par la demande de brevet PCT/WO 93 18465 des juke-boxes informatisés permettant de recevoir à travers un réseau de télécommunication et un modem connectant le juke-boxes au réseau, des informations numérisées constituant des chansons ou morceaux musicaux téléchargés dans une mémoire de masse du juke-boxes. Le système de communication sert également au téléchargement de fichiers représentatifs d'informations graphiques numérisées, les chansons et les fichiers graphiques étant compressés avant leur envoi sur le réseau. Le processeur du juke-boxes exploite ensuite ces fichiers en les décompressant et en envoyant les données graphiques au circuit vidéo et les données de la chanson au circuit audio.

Toutefois, le processeur gère également les interfaces homme machine et la gestion de ces différents éléments se fait séquentiellement en affichant les images graphiques représentatives de la chanson, ensuite en répondant à l'actionnement des touches par l'utilisateur puis en recherchant si l'utilisateur a payé les montants souhaités et enfin, lorsque le montant souhaité a été réglé, à déposer la sélection dans une file en vue de son exécution ultérieure. Par ailleurs ce système ne peut fonctionner qu'en affichant d'abord les images graphiques et en lançant ensuite l'exécution de la chanson car le processeur ne peut, d'après les logigrammes, exécuter deux taches en même temps. Enfin, les représentations graphiques sont uniquement des données digitalisées par une table scanner de la couverture de l'album de la chanson. En aucun cas un tel juke-box ne permet l'affichage d'images animées en même temps que le diffusion de chanson ou de musique. De même le processeur étant utilisé pour la décompression et le traitement des informations numériques en vue de la transformation en signaux audio, ne pourra prendre en compte de nouvelles actions d'un utilisateur qui rechercherait à effectuer une nouvelle sélection. Ceci apparaît clairement, notamment en page 12 de la demande PCT lignes 25 à 37. La sélection de nouvelles chansons ne peut se faire que dans le cas où le juke-boxes est en mode attractif, c'est-à-dire dans le mode où il affiche successivement des représentations graphiques des différentes chansons stockées dans le juke-boxes.

Il est également connu, par le brevet américain 4,956,768, un serveur large bande pour transmettre de la musique ou des images constituées par un processeur principal communiquant par un canal DMA avec un disque dur et des cartes de sortie contrôlées chacune par un processeur local supplémentaire qui gère un mode alternatif d'accès à deux mémoires tampon A et B et dont l'une, A, est utilisée pour délivrer par exemple des données musicales à un utilisateur tandis que l'autre B est remplie. Chacune des cartes de sortie est reliée à une station de consultation qui peut être locale et située dans les mêmes locaux que le serveur ou à distance et reliée par un réseau de communication audio ou vidéo. Le serveur reçoit les données bloc par bloc et s'assure que les parités des échantillons sont correctes et refuse le bloc incluant plus de deux échantillons successifs faux. Chacun des blocs est naturellement désigné par un numéro. Une fois qu'un bloc a été accepté, il peut être stocké sur le disque dur local en enregistrant son numéro d'ordre qui n'a aucune relation avec son adresse physique sur le disque dur. Les stations de consultation ont des sorties audio et vidéo tels que des haut-parleurs ou des écouteurs et un moniteur télévision permettant l'écoute de la musique ou la visualisation d'images en réponse à des demandes reçues de terminaux inclus dans les stations de consultation. Dans un tel système, les stations de consultation ou le premier processeur de communication doivent avoir un logiciel spécifique de gestion des requêtes de sélection de morceaux musicaux ou vidéo. Ce n'est que lorsque la requête a été effectuée et adressée au processeur du serveur large bande que celui-ci peut transférer, sous l'autorité du processeur local, les données dans les mémoires tampon de façon à ce que ce processeur local assure le convoyage des données vers les stations de consultation. Il est, en outre, bien précisé que le remplissage des cartes de sortie et des mémoires tampon n'est effectué qu'après avoir reçu l'autorisation du processeur local de la carte.

Par conséquent, un tel système ne peut fonctionner que dans le cadre d'un dispositif multiprocesseur et ne suggère nullement l'utilisation d'un tel serveur pour un juke-box contrôlé par un seul processeur fonctionnant dans un environnement multitâche. Un tel système suggéré par le brevet américain met donc en oeuvre une installation complexe permettant de délivrer un service à plusieurs stations de consultation; cette installation complexe est donc onéreuse et incompatible avec un système à juke-boxes dont le prix de revient doit être le plus réduit possible.

Enfin les juke-boxes de l'art antérieur comportent pour réaliser l'interface homme machine de nombreuses pièces mécaniques et électromécaniques qui augmentent les possibilités de défaillance du système et ne confèrent pas au dispositif une bonne ergonomie.

La présente invention a pour but de remédier aux divers inconvénients présentés ci-dessus par les systèmes de l'art antérieur et propose un système de reproduction audiovisuelle numérique intelligent, permettant une meilleure ergonomie tout en diminuant le risque de défaillance par la réduction du nombre de pièces mécaniques.

Ce but est atteint par l'objet des revendications indépendantes 1 ou 2 ou 3.

Des modes de réalisation particuliers sont définis par les revendications dépendantes 4 à 15.

D'autres avantages et particularités de l'invention apparaîtront à la lecture de la description suivante, faite en référence aux dessins annexés, donnés à titre d'exemple illustratif mais non limitatif d'une réalisation de l'invention, dans lesquels:

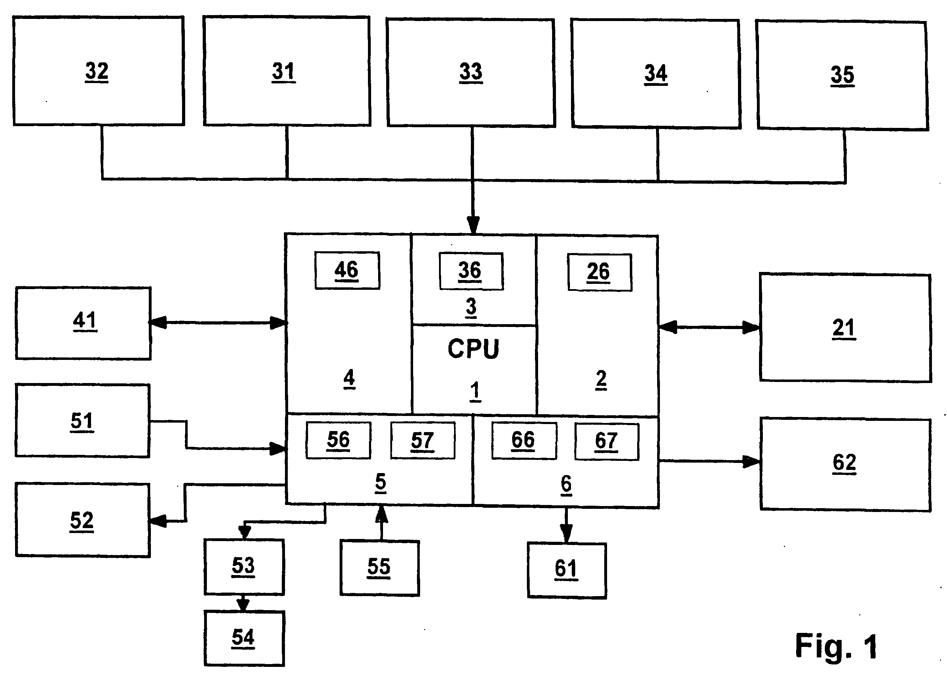

La figure 1 représente un schéma électrique du matériel constituant l'invention;
La figure 2 représente un organigramme faisant apparaître les modules de services spécifiques d'une tâche et géré au moyen du système d'exploitation multitâche, l'ensemble des modules étant inclus dans une librairie stockée dans les moyens de mémorisation.
La figure 3 représente l'organisation du système multitâches gérant l'ensemble des moyens matériels et logiciels;
La figure 4 représente un logigramme de description du fonctionnement du système de gestion multitâches;
La figure 5 représente le logigramme de vérification d'activité des tâches.
La figure 6 représente le logigramme de mise en file d'attente des sélections ;
La figure 7 représente le schéma d'organisation des bases de données ;
La figure 8 représente l'affichage graphique réalisé par le module graphique du module de gestion de système (CM) ;
La figure 9 représente l'affichage graphique réalisé par le module graphique du module mode en service (RMM) ;
La figure 10 représente l'affichage graphique réalisé par le module graphique du module de mode d'acquisition de nouvelles sélections (NSAM) ;
La figure 11 représente un sous module graphique de sélection particulière ;
La figure 12 représente le module graphique du module de mode de sélection et d'exploration clients (CBSM) ;
La figure 13 représente un sous module graphique d'affichage de statistiques appelable lors de l'utilisation du module de mode d'acquisition de nouvelles sélections (NSAM).

De préférence, mais cependant de manière non limitative, le système de reproduction audiovisuelle utilise les éléments matériels énumérés et référencés ci-après.

L'unité centrale 1 à microprocesseur est un système compatible PC de haute performance, le choix lors de la mise en oeuvre s'est porté sur un système du type Intel 80486 DX/2 qui possède des moyens de mémorisation et les caractéristiques suivantes:
- compatibilité avec le bus local Vesa,
- antémémoire du processeur: 256 kO,
- mémoire vive: RAM de 32 MO ou plus auto-alimentée
- ports série et parallèle de haute performance,
- adaptateur graphique type SVGA à microprocesseur
- contrôleur de bus type SCSI/2,

Toute autre unité centrale possédant des performances équivalentes ou supérieures pourra être utilisée dans l'invention.

Cette unité centrale commande et gère une circuit de commande de son (5), un circuit (4) de commande des télécommunications, un circuit (3) de commande des entrées, un circuit (2) de commande de la mémorisation de masse, un circuit (6) de commande des moyens de visualisation. Les moyens de visualisation se composent principalement d'un moniteur vidéo (62) à écran plat de 14 pouces (35,56 cm) sans entrelacement de type SVGA à haute résolution et faible rayonnement. C'est ce moniteur qui est utilisé pour la reproduction d'images (par exemple les couvertures d'albums des sélections musicales), de graphiques ou de clips vidéo.

Des moyens de mémorisation de masse (21) utilisant des disques durs de type SCSI haute vitesse et haute capacité, sont associés aux moyens de mémorisation déjà présents dans le dispositif à microprocesseur. Ces moyens servent au stockage d'informations audiovisuelles numérisées et compressées.

Un modem de télécommunications (41) haute vitesse d'au moins 28,8 Kbps ou tout autre matériel de télécommunication associé à d'autres média de télécommunication est intégré pour autoriser la liaison avec un réseau de distribution d'informations audiovisuelles contrôlé par un serveur central.

Pour la reproduction des informations sonores des sélections musicales, le système comporte des haut-parleurs (54) recevant le signal d'un amplificateur - tuner (53) relié au circuit électronique (5) de type synthétiseur de musique prévu pour supporter un grand nombre de sources d'entrée tout en fournissant une sortie présentant une qualité de type CD (disque compact), tel que par exemple l'adaptateur audio multimédia à microprocesseur, du type carte "Sound Blaster" SBP32AWE de chez Creative Labs Inc sur lequel deux tampons mémoire (56, 57) sont ajoutés dans le but explicité ultérieurement.

De même le circuit de commande des moyens de visualisation comporte également deux mémoires tampon (66, 67) dans le but explicité ultérieurement.

Une alimentation thermiquement régulée de 240 watts ventilée fournit l'énergie au système. Cette alimentation est protégée contre les surintensités et les suroscillations.

Le système de reproduction audiovisuelle gère, par le biais de son circuit contrôleur d'entrée (3), un écran tactile (33) "Intelli Touch" de 14 pouces (35,56 cm) de chez Elo Touch Systems Inc,.qui inclut un panneau de revêtement de la vitre utilisant la "technologie avancée d'onde de surface" ainsi qu'un contrôleur de bus de type AT. Cet écran tactile permet après avoir affiché sur le moniteur vidéo (62) ou l'écran d'un téléviseur (61) diverses informations de sélection utilisées par les clients, ainsi que des informations de commandes et de contrôle de gestion utilisées par le gérant ou le propriétaire du système. Il est également utilisé à des fins de maintenance en combinaison avec un clavier externe (34) qui peut être relié au système qui possède pour cela un connecteur de clavier, contrôlé par un verrou à clé (32) à travers le circuit d'interface (3).

le circuit d'entrée (3) interface également avec le système un ensemble télécommande (31) constitué, par exemple:
- d'une télécommande infrarouge de chez Mind Path Technologies Inc., émetteur qui possède 15 touches de commande pour le système à microprocesseur et 8 touches de commande pour dispositif de projection.
- d'un récepteur infrarouge avec adaptateur série de chez Mind Path Technologies Inc.

Un dispositif de paiement de redevances (35) de chez National Rejectors Inc., est également relié au circuit d'interface d'entrée (3). Il est également possible d'utiliser tout autre dispositif qui permette la réception de tout mode de paiement par pièces, billets, jetons, cartes magnétiques à puces ou combinaison des moyens de paiement.

Pour loger le système, il est de plus prévu un châssis ou bâti en acier avec garnitures extérieures personnalisables.

Outre ces éléments, un microphone (55) sans fil est relié au contrôleur de son (5), ce qui permet de transformer ce dernier en un puissant système d'annonces et d'informations destinées au public ou aussi en machine de karaoké. De même un système de haut-parleurs sans fil peut être utilisé par le système.

L'ensemble (31) de commande à distance permet au gérant, par exemple de derrière le bar, d'accéder et de contrôler différentes commandes telles que:
- la commande marche/arrêt du microphone,
- la commande de mise en sourdine des haut-parleurs,
- la commande de contrôle de volume sonore,
- la commande d'annulation de la sélection musicale en train d'être écoutée.

Deux tampons (56, 57) sont associés au circuit contrôleur de son (5) pour permettre de mémoriser chacun de façon alternative une information correspondant à un quart de seconde de son. De même deux tampons (66, 67) sont associés au circuit contrôleur de vidéo (6) capables chacun et alternativement de mémoriser un dixième de seconde d'images. Enfin un tampon respectif (46, 36, 26) est associé à chacun des circuits de contrôleur de communication(4), d'interface d'entrée (3) et de mémorisation (2).

Le logiciel d'exploitation du système a été élaboré autour d'une librairie d'outils et de services très largement orientée vers le domaine audiovisuel dans un univers multimédia. Cette librairie inclut de manière avantageuse un système d'exploitation multitâche performant qui autorise efficacement l'exécution simultanée de multiples fragments de code. Ce logiciel d'exploitation permet ainsi les exécutions concurrentes, de manière ordonnée et en évitant tout conflit, d'opérations réalisées sur les moyens de visualisation, les moyens de reproduction sonores de même que la gestion des liaisons de télécommunications au travers du réseau de distribution. De plus, ce logiciel présente une grande flexibilité.

Cette librairie comporte comme on le verra ultérieurement une interface de programmation pour l'écran tactile (153) associé à chaque module graphique qui sera décrit ultérieurement et comportant, en fonction du module graphique associé, des fonctions de réactions à une activation par un ou plusieurs événements extérieurs. Les événements extérieurs proviennent de l'utilisateur et sont traités par l'interface d'écran tactile pour pouvoir être interprétés par le système d'exploitation comme l'équivalent d'un événement souris. Ainsi le toucher d'une zone est reconnu par l'interface de l'écran tactile comme un événement appui (down), le déplacement du doigt sur l'écran comme un événement de traîne (drag) le retrait du doigt de l'écran comme le relâchement d'un bouton (up). Chaque événement interprété par l'interface écran tactile associé, est délivré ensuite au module concerné pour provoquer soit une modification du déroulement du programme par l'appel par exemple d'un autre module graphique, soit une modification de paramètres physiques de la machine en provoquant une mémorisation de ces paramètres et une utilisation ultérieure par les éléments électroniques associés à ce paramètre.

Les données audiovisuelles numérisées et compressées sont stockées dans les moyens de mémorisation (21).

Chaque sélection est disponible selon deux formats numérisés: avec une qualité hi-fi ou une qualité CD.

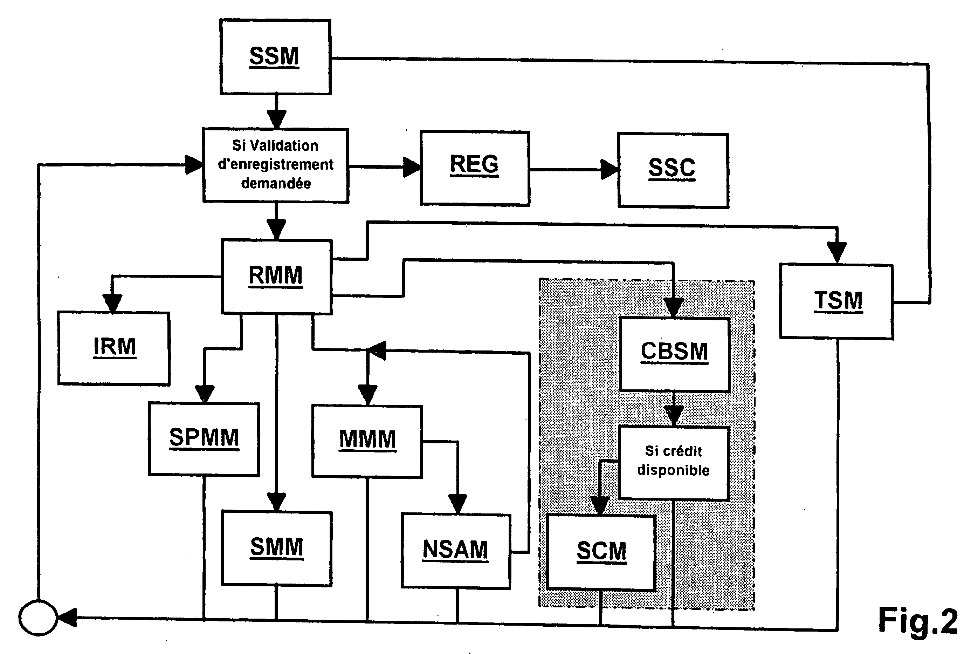

Préalablement à la description et à la lecture de cet organigramme de la figure 2, il est essentiel de noter que, bien que tous ces modules décrits séparément semblent être utilisés d'une manière séquentielle, en réalité, les tâches spécifiques de ces modules sont exécutées simultanément dans un environnement utilisant le système d'exploitation multitâche. Par conséquent, l'organigramme indique des opérations spécifiques qu'un module doit effectuer et non un branchement vers ce module qui invaliderait toutes les opérations effectuées par les autres modules.

Le premier module, référencé SSM, est le module de démarrage du système. Ce module ne fournit qu'un seul service, par conséquent il se charge automatiquement au moment de la mise sous tension du système. Si le système est démarré avec un numéro d'enregistrement correct, il rentre alors directement dans le mode "en service" du module référencé RMM.

Le module REG est le module de mode d'enregistrement qui, lorsqu'il est activé pour la première fois ou lorsqu'une approbation pour un nouvel enregistrement est nécessaire, indique son numéro de série de logiciel et demande que l'utilisateur entre ses coordonnées telles que le nom de l'établissement, l'adresse et le numéro de téléphone.

Le module RMM est le module du mode "en service", qui est le mode de fonctionnement dans lequel le système entre dès que son numéro d'enregistrement est validé. Dans ce mode, le système est prêt pour manipuler toute requête qui peut être déclenchée par différents événements prédéfinis, comme par exemple:
- des clients qui touchent l'écran: lorsqu'un client ou un utilisateur touche l'écran, le système transfère le contrôle de sa session de premier plan au module CBSM du mode de sélection et d'exploration client,
- des requêtes d'appel serveur du réseau de télécommunications: lorsque le système détecte une boucle sur la ligne téléphonique, il émet une procédure asynchrone d'arrière-plan: le mode de services télécom du module TSM,
- des requêtes concernant le commutateur de clé (32): lorsque le gérant tourne le commutateur de clé, le système donne le contrôle de sa session de premier plan au module SMM (ou MMM) de gestion système,
- la réception d'un signal de télécommande: quand une commande est reçue, elle est traitée dans une session d'arrière-plan par le module SMM de commandes système alors que la session de premier plan reste disponible pour d'autres interventions,
- l'apparition d'une fin de temporisation montrant l'inactivité du système: lorsque l'un des différents temporisateurs est activé, le contrôle est temporairement donné au module IRM de routines d'inactivité pour traitement.

Le système reste dans le mode "en service" jusqu'à ce que l'un des événements décrits ci-avant se produise.

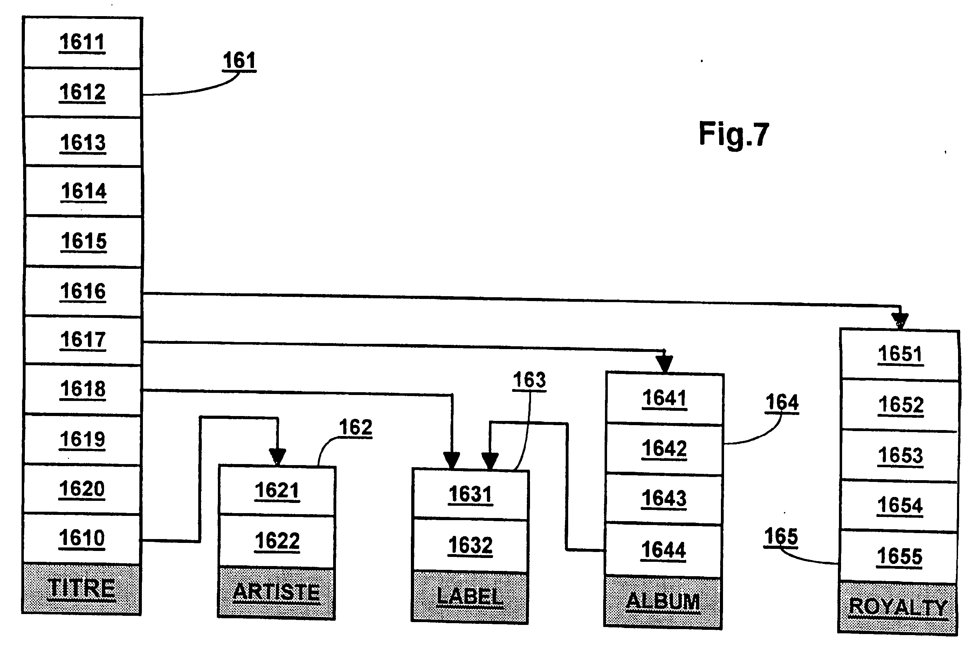

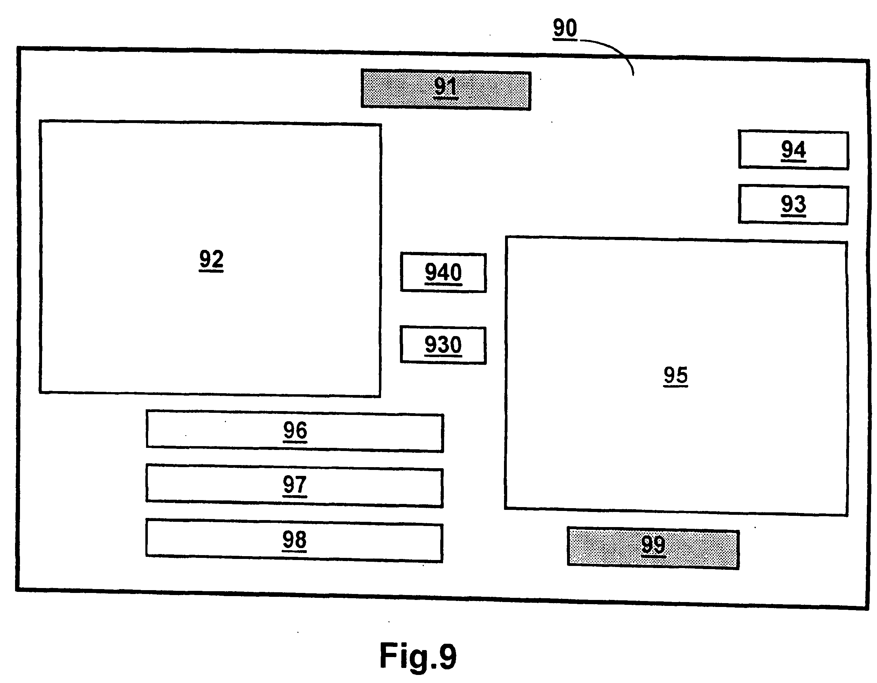

Ainsi le module RMM du mode en service comporte un module permettant un affichage graphique correspondant par exemple à celui de la figure 9. Ce module graphique permet l'affichage d'une fenêtre (90) comportant par exemple l'affichage dans une zone (91) de la mention "en cours" d'exécution. Une deuxième fenêtre (92) de dimension inférieure et incluse dans la première fenêtre (90) permet la représentation graphique de la pochette du disque en cours d'exécution. Dans un pavé numérique (93) est indiqué le temps total correspondant aux morceaux à exécuter mémorisés dans la file d'attente. Dans un autre pavé numérique (94) est indiqué le nombre de chansons en file d'attente. Dans une troisième fenêtre (95) de dimension inférieure et incluse dans la première fenêtre (90) est représentée une image animée tel qu'un clip vidéo, des images de synthèses ou un texte défilant s'il s'agit de l'exécution du titre "KARAOKE" mémorisés dans les fichiers images du disque dur. Dans un pavé alphanumérique (96) figure le titre de l'album et dans un deuxième pavé alphanumérique (97) le nom de l'album. Dans un troisième pavé alphanumérique (98) est mentionné le nom de l'artiste ou du groupe. Le décompte du temps restant du titre exécuté est affiché dans le pavé numérique (940), la durée du titre exécuté est affichée dans le pavé numérique (930). Ces informations proviennent de la base de données (16) à partir du numéro d'identification du titre et des informations mémorisées dans la base de données selon les processus d'accès correspondant à la figure 7 est explicité ultérieurement. Enfin cette fenêtre (90) comporte une zone (99) dans laquelle figure la mention "appuyez" ou "touchez-moi" incitant l'utilisateur à poser son doigt sur l'écran pour que le module RMM, détectant par l'intermédiaire du module d'interface de l'écran tactile la position du doigt sur n'importe quelle zone de l'écran, transfère le contrôle de sa session au module CBSM de mode de sélection et d'exploration des sélections par le client.

Dans le cas où le juke-box n'est plus en cours d'exécution de chanson et lorsque les chansons de la file sont épuisées, l'une des deux fenêtres (92, 95) pourra servir à afficher des événements promotionnels ou à afficher les sélections d'échantillonnage entrées en mémoire par le gérant du juke-box. Ces échantillons de sélection ont pour but d'inciter les clients à écouter la chanson entière.

Le module IRM est le module de routines d'inactivité. Ce module contient des routines réalisant des fonctions prédéterminées telles que l'affichage de la couverture d'un album, l'émission de parties de morceaux musicaux présents dans le système, la reproduction de sélections complètes à des fins promotionnelles internes, des reproductions audio à des fins promotionnelles externes, des annonces promotionnelles parlées de nouvelles sélections musicales, le retour vers une source auxiliaire, auxquelles il peut être fait appel lorsque le système est en inactivité et qu'une période de temps prédéfinie mais réglable, correspondant à une temporisation, s'est écoulée.

Le module SMM est le module de commandes système. Ce module permet de réaliser des fonctions qui commandent au système d'accepter une entrée demandée par un dispositif de télécommande infrarouge, ces fonctions étant instantanément traitées sans que le processus en train de se dérouler ne soit arrêté. Un très grand nombre de telles fonctions sont possibles, seules quelques unes sont, de manière non limitative, ci-dessous listées:
- réglage du volume sonore des sélections jouées,
- réglage du volume sonore de la source auxiliaire jouée,
- commande marche/arrêt du microphone,
- réglage du volume sonore du microphone,
- réglage balance, voie droite, voie gauche,
- contrôle du niveau des fréquences basses,
- contrôle du niveau des fréquences aiguës,
- commande d'annulation ou de saut de plage d'une sélection musicale,
- commande de changement d'écran graphique précédant et suivant celui affiché,
- déclenchement d'une remise à l'état initial des réglages audio entrées et sorties.

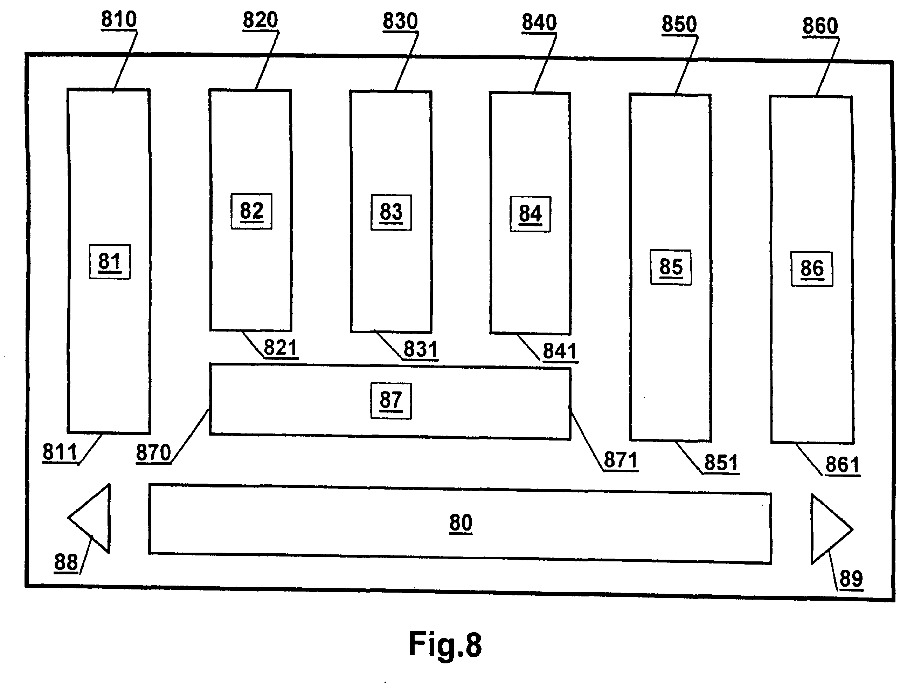

Ce module SMM peut, lors de l'actionnement de la télécommande provoquer un affichage sur l'écran permettant pour les fonctions identiques à celle du module MMM une représentation similaire à celle décrite en liaison avec la figure 8 explicitée ci-après.

Le module MMM est le module de mode de gestion. Ce module est déclenché lorsque le commutateur de clé est tourné par le gérant. L'affichage de l'écran ordinaire est remplacé par un affichage spécifique à la gestion des systèmes et des paramètres d'exploitation du système comme représentés à la figure 8. Sur cet écran on visualise dans une fenêtre grâce à un module de représentation graphique un ensemble de curseurs dont la position représentée entre les positions extrêmes (810, 820, 830, 840, 850, 860, 870) et (811, 821, 831, 841, 851, 861, 871) représentant la course maximale du curseur correspond à une représentation visuelle du niveau de la fonction de l'élément dont on veut contrôler la valeur. Ainsi le curseur (81) permet de contrôler le niveau du volume maître, le curseur (82) permet de contrôler le niveau du volume du juke-box, le curseur (83) permet de contrôler le niveau du volume du microphone ; le curseur (84) permet de contrôler le niveau du volume de l'entrée auxiliaire (radio) ; le curseur (85) permet de contrôler le niveau des basses ; le curseur (86) permet de contrôler le niveau des aigus ; le curseur (87) permet d'effectuer le réglage de la balance ; la flèche (88) permet d'afficher l'écran graphique précédent et la flèche (89) permet d'afficher l'écran suivant ; la zone (80) permet de déclencher une remise à l'état initial des réglages des curseurs (81) à (87). Ce module graphique qui permet l'affichage des curseurs sur l'écran du moniteur ou du téléviseur coopère avec le troisième module d'interface (153) de programmation pour l'écran tactile (33) en permettant au gérant, lorsqu'il vient poser son doigt sur l'une des représentations de curseur et ensuite fait glisser son doigt, de déplacer la représentation du curseur sur l'écran en même temps que le doigt de façon à ce que cette représentation du curseur suive le doigt. Lorsque l'identification de position du doigt avec la position du curseur a été faite le module d'interface va suivre les déplacements du doigt et modifier les coordonnées de position du curseur en fonction de la position du doigt. Lorsque le doigt est enlevé de l'écran tactile la dernière position mémorisée est enregistrée dans un fichier du disque dur et l'ensemble de ces données sont relues à chaque démarrage du système pour servir de référence d'ajustement des paramètres physiques de réglage des cartes électroniques respectives dont on veut modifier le niveau de la sortie ou d'entrée. Ainsi on comprend qu'à l'aide de l'écran de la figure 8 il est possible de contrôler les paramètres d'opération du système tels que :
- niveau du "master volume" volume maître ;
- niveau du volume du juke-box ;
- niveau du volume de l'entrée auxiliaire (radio) ;
- niveau du volume du microphone ;
- niveau des basses ;
- niveau des aigus ;
- réglage de la balance.

D'autres modules de représentation graphiques peuvent permettre de fixer également les paramètres suivants :
- le prix d'un titre ou le nombre de titres pour une valeur prédéterminée ;
- le délai d'inactivité avant d'enclencher le mode promotionnel audio et visuel ;
- le délai d'inactivité avant d'enclencher la source auxiliaire (radio) ;
- le délai d'inactivité avant d'enclencher le mode d'échantillonnage des sélections ;
- l'endroit (en secondes à partir du début) où démarrer l'échantillonnage ;
- durée (en secondes) de l'échantillon.

Toutes les valeurs ajustées à l'aide de cet écran de contrôle sont sauvegardées sur disque et relues à chaque démarrage du système.

Le fichier contenant les valeurs de contrôle sur le disque est dans un format machine qui n'est pas lisible. Le fichier ne prend pas plus de 128 octets d'espace disque au total.

Avec ce nouvel affichage le gérant est également capable de contrôler tous les réglages qui sont réalisables avec la télécommande. Il peut également prendre le contrôle de commandes de bas niveau additionnelles permettant par exemple de définir les commandes à valider ou à invalider sur la télécommande. Il est aussi capable de définir un maximum de hauts et bas niveaux pour chaque source de sortie du système, ces limites définissant la gamme disponible sur la télécommande. A partir de l'affichage, le gérant est capable d'accéder au mode d'acquisitions de nouvelles sélections en touchant un bouton repéré sur l'écran tactile, qui lance l'exécution du module NSAM. Lorsque le gérant a achevé de définir ces commandes ainsi que la configuration du système, il suffit alors qu'il enlève la clé et le système retourne automatiquement au mode "en service".

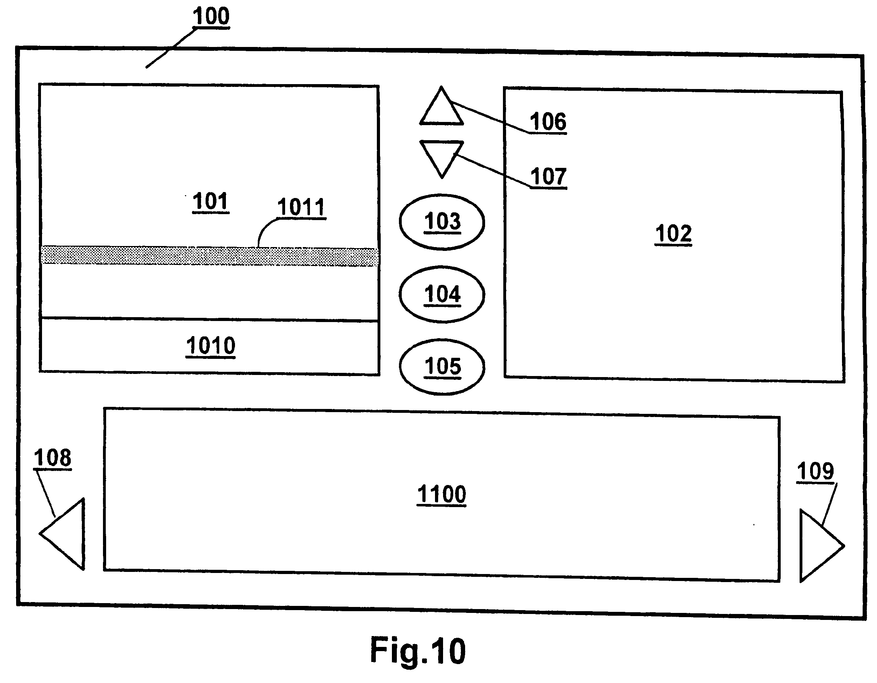

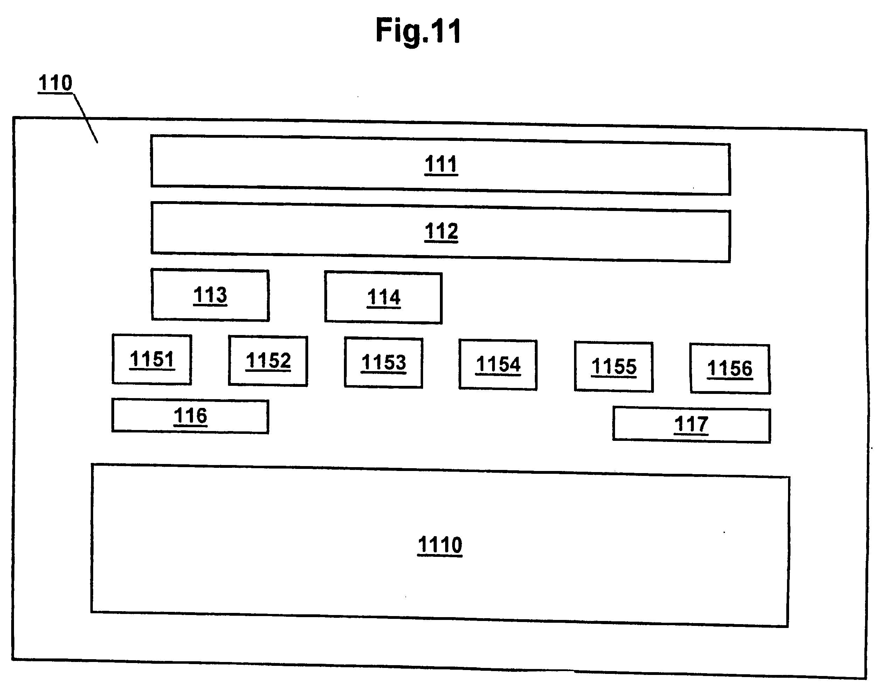

Le module NSAM est le module de mode d'acquisitions de nouvelles sélections. Ce module représenté à la figure 10 comporte un module graphique qui permet l'affichage d'une fenêtre (100). Cette fenêtre incorpore trois sous-fenêtres (101, 1010, 102), la première (101) sous forme de liste déroulante permet par actionnement des boutons de flèches déroulement (106, 107) de faire défiler la liste de sélection. Cette liste de sélection ne peut être affichée, soit qu'après avoir visualisé l'écran de sélection de catégorie (figure 11), en ayant préalablement activé le bouton (105), la mise en surbrillance d'un titre (1011) s'effectuant en touchant le titre en question, soit qu'après avoir introduit dans la sous fenêtre (1010) au moins un caractère au moyen du clavier (1100). La deuxième fenêtre (102) permet d'afficher :
- lorsque le bouton de commande de sélection (103) est activé, la mention "achat en cours d'exécution" et au cas où la capacité de mémoire du disque dur n'est plus suffisante, la mention "mémoire insuffisante" ; une liste de titres apparaît sur cette même fenêtre (102) correspondant à l'espace mémoire insuffisant ; ces titres ont été sélectionnés automatiquement dans la base de données statistiques selon le critère du titre jamais écouté ou le moins écouté ; cette liste de titres proposés permet au gérant de prendre la décision de les supprimer du disque dur et de libérer ainsi un espace mémoire suffisant pour que l'achat prévu puisse s'effectuer ;
- lorsque le bouton "détail" (104) est activé, il apparaît sur la fenêtre (102) différentes informations associées au titre en surbrillance, telles que le prix du titre sélectionné, sa durée, le nom de l'album, le nom de l'artiste ou toute autre information significative du titre sélectionné.

Un bouton (103) permet de commander la sélection qui est ensuite téléchargée. Un bouton (104) permet d'afficher des détails sur la sélection. Un troisième bouton (105) permet de sélectionner la catégorie de musique ou sélection à commander. L'actionnement de ce troisième bouton (105) par le gérant permet d'afficher l'écran représenté à la figure 11 que l'on va décrire ci-après. Enfin l'écran de la figure 10 comporte également un pavé alphanumérique représentant un clavier (1100) qui permet au gérant en tapant, soit le nom de l'album, de l'artiste ou du titre qui s'inscrit dans la sous fenêtre (1010), de faire apparaître dans la fenêtre (101) une liste de titres plus ou moins restreinte en fonction du critère utilisé et des touches de commandes permettant d'afficher par la flèche (108) l'écran précédent et par la flèche (109) l'écran suivant. Le module d'interface de programmation (153) pour l'écran tactile (33) comporte différents modules chacun des sous-modules correspond à un des modules graphiques évoqués ci-dessus. Ainsi lorsque le système exploite le module graphique NSAM de la figure 10 à ce module graphique est associé un module d'interface graphique (153) correspondant qui permet de considérer la zone (103) comme une zone de lancement de la commande pour faire appel ultérieurement à la fonction de téléchargement du module TSM. De même ce module d'interface (153) associé au module graphique NSAM permet de considérer le toucher de la zone (105) comme l'appel du module graphique permettant la visualisation de la figure 11.

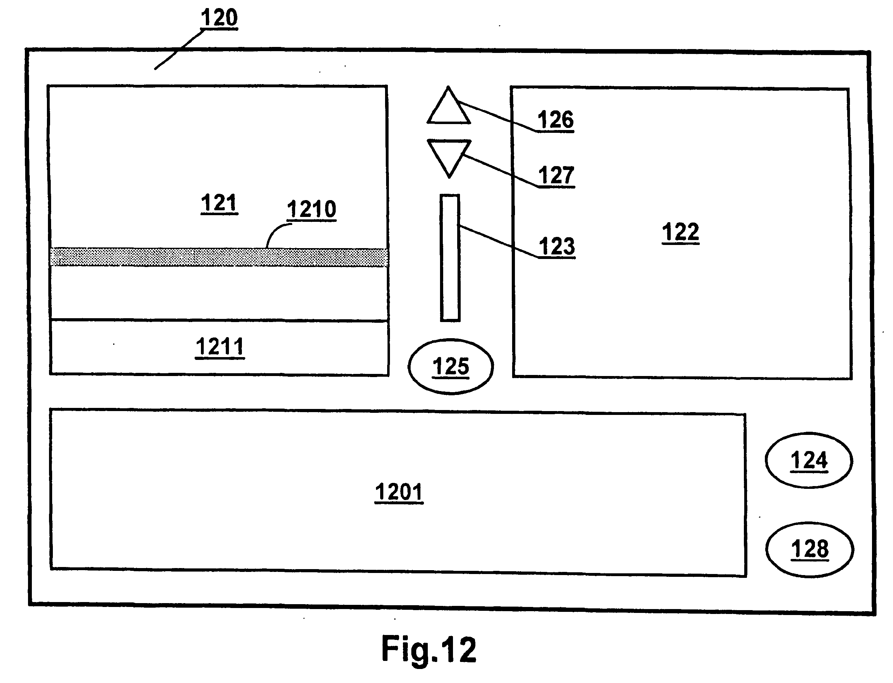

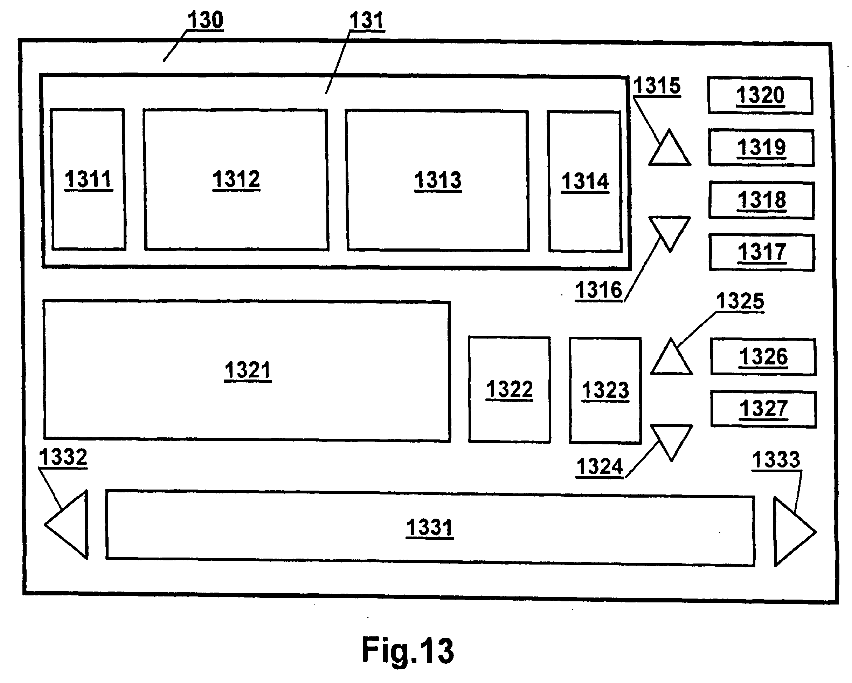

Le module CBSM est le module de mode de sélection et d'exploration client. L'accès à ce module est déclenché à partir du mode "en service" de la figure 9 lorsque le client touche l'écran. L'affichage permet à l'usager de visualiser en plus du menu des écrans prévus pour une exploration puissante, et de diffuser des messages éventuels vocaux numérisés diffusés en même temps que le menu ou l'écran pour guider l'utilisateur dans son choix de sélections musicales. Un exemple de réalisation du module graphique du module de mode de sélection et d'exploration du client est représenté à la figure 12 dans laquelle une fenêtre (120) comporte trois sous fenêtres (121, 1211, 122), la première (121) étant déroulante. Le déroulement de la première fenêtre (121) est commandé par des flèches de déroulement supérieur (126) et inférieur (127). Comme décrit précédemment pour le module NSAM, l'apparition d'une liste de titres dans la fenêtre (121) ne pourra se faire que si un critère de sélection a été introduit à l'aide du clavier (1201) associé à la fenêtre (1211) de la figure 12 ou à l'aide de la fenêtre (110) déclenchée par le bouton de catégorie (125) associée, soit au clavier (1110) pouvant inscrire un texte alphanumérique dans les pavés (111, 112, 113, 114), soit aux zônes tactiles (1151) à (1156) de la fenêtre (110)représentée figure 11. La fenêtre (121) permet l'affichage des titres des sélections dans l'ordre alphabétique par nom de chanson. La fenêtre (122) permet d'afficher le visuel correspondant à la pochette de la chanson, un indicateur (123) permet d'indiquer sous forme d'un niveau le crédit ou l'absence de crédit. Cet indicateur (123) est gradué en nombre de sélections possibles. Cet indicateur (123) indique à l'utilisateur s'il dispose ou non d'un crédit suffisant pour effectuer une ou plusieurs nouvelles sélections ou, dans le cas contraire, incite ce dernier à insérer des pièces dans le monnayeur. Un bouton (125) permet de sélectionner la catégorie des chansons et de passer à l'affichage de la fenêtre suivante représentée à la figure 11. Enfin ce module graphique CBSM comporte également un bouton (128) permettant de déclencher l'affichage des chansons à succès et un bouton (124) qui permet de valider la ou les sélections pour déclencher leur introduction dans la file d'attente ou leur exécution immédiate et successive si la file est vide. La fenêtre (120) est complétée par un clavier alphanumérique (1201) qui permet de rentrer directement le nom d'un autre chanteur, le titre d'une chanson. L'actionnement du bouton catégorie (125) de la figure 12 équivalent à (105) de la figure 10 provoque l'appel d'une sous routine de module graphique provoquant l'affichage de la fenêtre (110) de la figure 11 dans laquelle un pavé alphanumérique permet d'introduire, à l'aide du clavier alphanumérique (1110), le nom d'un album dans la zone (111), un second pavé alphanumérique (112) permet d'introduire le nom d'un artiste dans la zone (112), un troisième et quatrième pavés alphanumériques (113, 114) permettent d'introduire une année ou une période et enfin une ligne de boutons (1151 à 1156) permet de sélectionner respectivement uniquement les albums concernant la musique de type "rock-and-roll", la musique de type "danse", la musique de type "country", la musique de type "rapp", la musique de type "jazz" ou les musiques pour karaoké. Enfin la fenêtre (110) comporte un bouton (116) d'annulation en cas d'erreur, un bouton (117) de validation du choix de la sélection et permettant le retour à la fenêtre (120). A l'intérieur de la sous fenêtre (121) apparaît alors une liste de un à plusieurs titres en fonction du critère de sélection, l'utilisateur sélectionne le titre qu'il désire écouter en touchant le titre en question, celui-ci se met en surbrillance (1210) et simultanément la sous fenêtre (122) affiche le visuel correspondant à la pochette de l'album contenant le titre sélectionné. Il suffit à l'utilisateur de toucher le bouton (124) qui active le changement d'écran graphique en faisant apparaître la fenêtre (90) dans laquelle il verra apparaître dans la sous fenêtre (92) la pochette du titre qu'il a sélectionné et l'écoutera immédiatement si la file d'attente (94) était à zéro, dans le cas contraire il verra apparaître la pochette du titre en cours d'exécution et dans le pavé (94) le nombre de titres en file d'attente augmenté du nombre de titres qu'il a sélectionné. Par le module MMM, le gérant a accès à la base de données de statistiques en actionnant la flèche (109, figure 10) qui fait apparaître la fenêtre graphique (130) représentant l'écran de statistiques illustré à la figure 13. Ce fichier de statistiques est transmis automatiquement au serveur central à l'aide du module de télécommunication (4) chaque fois qu'un lien est établi entre le juke-box et le serveur central. Cette fenêtre (130) comporte une première zone (131) comportant une pluralité de fenêtres déroulantes (1311, 1312, 1313, 1314) permettant chacune d'afficher respectivement la liste des numéros de produits (1311), de titres (1312), d'artistes (1313), de montants payés (1314). Le déroulement de ces fenêtres est actionné par la flèche (1315) vers le haut et par la flèche (1316) vers le bas. Les boutons graphiques tactiles (1317) à (1320) représentent respectivement les critères de sélection : le total des sommes encaissées par titres par ordre décroissant de ces sommes, la liste par ordre alphabétique des titres à succès, des noms des artistes, et de tous les titres. Le gérant, en touchant la ligne correspondante à un titre, fait apparaître dans la fenêtre (1321) le nombre de fois que ce titre a été sélectionné ainsi que toutes les informations de ce titre avec l'affichage des dates dans la fenêtre (1322) et des heures dans la fenêtre (1323). Les boutons graphiques tactiles (1326, 1327) définissent des critères de sélection respectivement par date et par heure. Les flèches (1325, 1324) font défiler respectivement vers le haut et vers le bas les lignes affichées dans les fenêtres (1322, 1323). La fenêtre (1331) est réservée aux messages spécifiques transmis par le serveur central au gérant du juke-box tels que :
- " attention il ne vous reste plus que "X" minutes de musique dans votre espace mémoire représentant "Y" titres ;
- les titres A, B, C et D ne sont jamais sélectionnés, souhaitez-vous les changer ? ;
- Coca Cola fera sa promotion à partir du ..... jusqu'au .....
- etc...

Les flèches (1332) et (1333) permettent d'accéder respectivement à l'écran précédent ou à l'écran suivant.

Là encore, comme précédemment, pour chaque module graphique associé à un module spécifique du juke-box est associé un module d'interface de programmation (153) correspondant pour l'écran tactile (33) de façon à ce que l'effleurement des différentes zones correspondantes aux boutons d'action ou aux flèches de déroulements soit interprété correctement par ce module d'interface (153). De même chaque module graphique comportera un module qui permettra l'exploitation correspondante de la base de données (16) qui sera décrite en liaison avec la figure 7 ultérieurement. Cette exploitation de base de données permettant lors de l'effleurement du bouton rock, par exemple, d'afficher successivement les différents albums et noms d'artiste de rock disponibles, cet affichage pouvant se faire sous forme de fenêtres déroulantes dans la fenêtre (101) de la figure 10 ou (121) de la figure 12 selon que l'action était effectuée par le client ou le gérant.

Le module TSM est le module de mode de services de télécommunications entre le serveur central et le système de reproduction audiovisuelle. Ce module permet de gérer tous les services de gestion disponibles sur le réseau de distribution. Toutes les tâches propres aux télécommunications sont gérées comme des tâches d'arrière-plan du système. Ces tâches n'utilisent toujours que les parties de temps de traitement restant une fois que le système a achevé toutes ses tâches de premier plan. Ainsi, lorsque le système est occupé avec l'une de ses tâches de plus haute priorité, les tâches de télécommunications, automatiquement, vont s'efforcer de diminuer les contraintes sur les ressources du système et récupérer tout temps de traitement du microprocesseur laissé disponible.

Le module SSC est le module de contrôle de sécurité du système. Ce module assure la gestion de la sécurité, chaque système se met en rapport avec un système contrôleur local selon un schéma temporel préétabli pour l'acquisition du signal d'approbation, sous la forme du numéro d'enregistrement, l'autorisant à fonctionner. En outre, s'il est constaté une fraude ou si le système ne peut plus communiquer au travers du réseau, ledit système s'arrête automatiquement de fonctionner

Le module SPMM permet la gestion des sélections de musiques chansons ou vidéo mises en file d'attente par le système en vue de leur exécution dans l'ordre de sélection.

Enfin le module SMM permet la gestion à distance des réglages du système par le gérant à l'aide de la télécommande.

Le système d'exploitation multitâches constitue l'élément essentiel pour permettre l'exécution simultanée de multiples fragments de codes et pour gérer les priorités entre les différentes tâches qui se réveillent

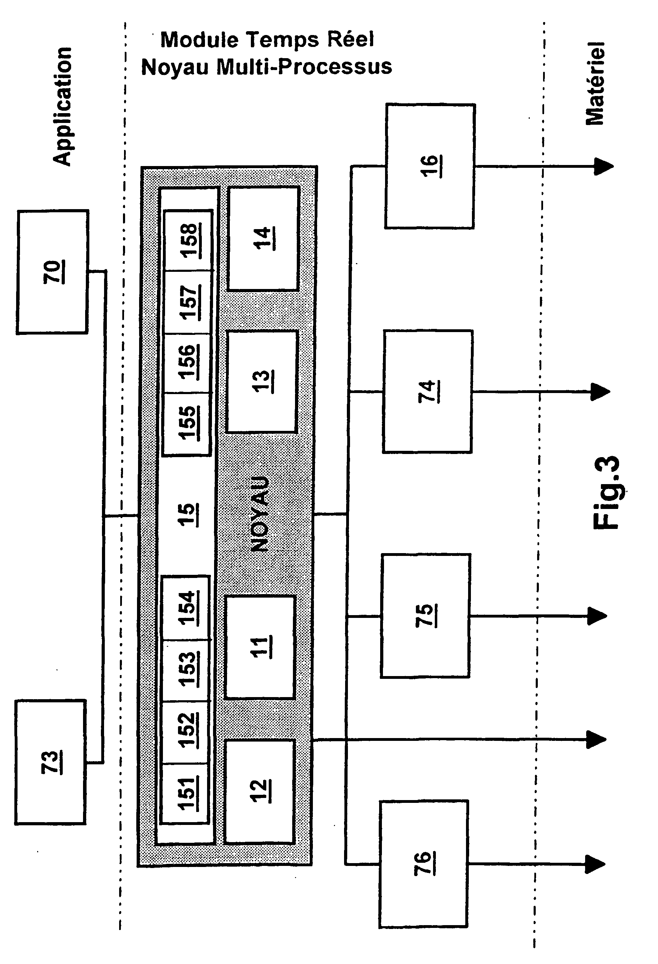

Ce système d'exploitation multitâche est organisé, comme représenté à la figure 3, autour d'un noyau comportant un module (11) de résolution des priorités entre tâches, d'un module (12) superviseur des tâches, d'un module (13) de sérialisation et un module (14) du processus de communication. Chacun des modules communique avec des interfaces (15) de programmation des applications et la base de donnée (16). Il y a autant d'interface de programmation qu'il y a d'applications. Ainsi le module (15) comporte une première interface (151) de programmation pour le commutateur à clé (32), une deuxième interface (152) de programmation pour la commande à distance (31), une troisième interface (153) de programmation pour l'écran tactile (33), une quatrième interface (154) de programmation pour le clavier (34), une cinquième interface (155) de programmation pour le dispositif de paiement (35), une sixième interface (156) de programmation pour le circuit de contrôle du son (5), une septième interface (157) de programmation pour le circuit (6) de contrôle de la vidéo et une dernière interface (158) pour le circuit (4) de contrôle des télécommunications.

Cinq tâches ayant un ordre de priorité décroissant sont gérées par le noyau (kernel) du système d'exploitation, la première (76) pour les entrées sorties vidéo a la priorité la plus élevée, la deuxième (75) de niveau deux concerne le son, la troisième (74) de niveau trois les télécommunications, la quatrième (73) de niveau quatre les interfaces et la cinquième (70) de niveau cinq la gestion. Ces ordres de priorités seront pris en compte par le module (11) de résolution des priorités au fur et à mesure de l'apparition ou de la disparition d'une tâche. Ainsi dès qu'une tâche vidéo apparaît, les autres tâches en cours d'exécution sont suspendues, la priorité est donnée à cette tâche et toutes les ressources du système sont allouées à la tâche vidéo. La tâche vidéo (76) en sortie a pour objet de décharger les fichiers vidéo de la mémoire de masse (21) alternativement vers l'un des deux tampons (66, 67) tandis que l'autre tampon (67, respectivement 66) est utilisé par le circuit (6) contrôleur de vidéo pour produire l'affichage après décompression des données. En entrée la tâche vidéo (76) a pour objet de transférer les données reçues dans le tampon de télécommunication (46) vers la mémoire de masse (21). Il en est de même pour la tâche son (75), d'une part en entrée entre le tampon de télécommunication (46) et le tampon (26) de la mémoire de masse (21)et d'autre part en sortie entre le tampon (26) de la mémoire de masse (21) et l'un des deux tampons (56, 57) du circuit (5) contrôleur de son.

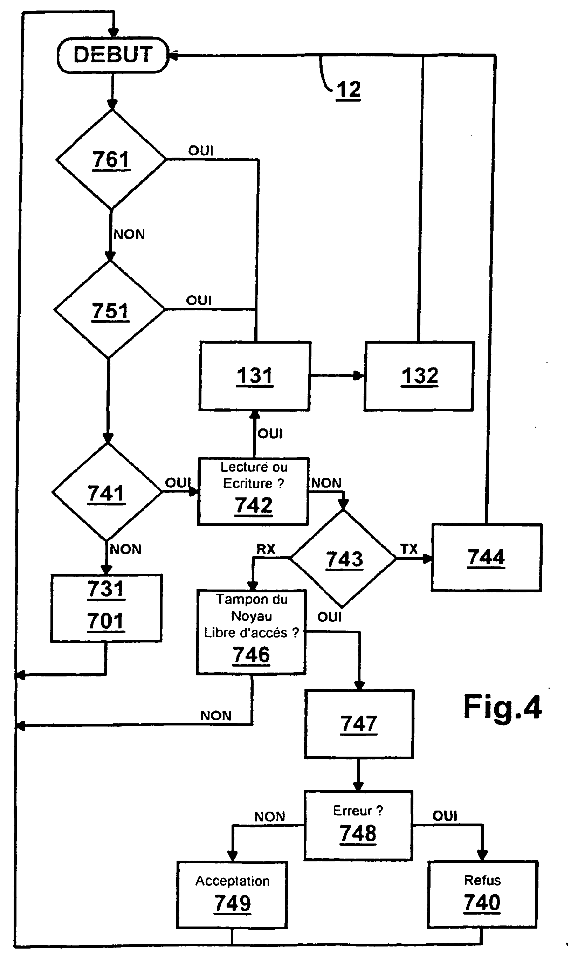

Le module superviseur de tâche (12) va maintenant être décrit en liaison avec la figure 4. Ce module effectue dans l'ordre de priorité un premier test (761) pour déterminer si la tâche vidéo est active, c'est à dire si un des tampons vidéo (66, 67) est vide. Dans le cas où la réponse est négative le module superviseur de tâche passe au test suivant qui est un second test (751) pour déterminer si la tâche son est active, c'est à dire si un des tampons (56, 57) est vide. En cas de réponse négative un troisième test (741) détermine si la tâche communication est active, c'est à dire si le tampon (46) est vide. Après une réponse affirmative à l'un des test, le module superviseur de tâche (12) remplit à l'étape (131) la file de requête (13) d'accès mémoires et exécute à l'étape (132) cette requête en lecture ou en écriture entre la mémoire de masse (21) et le tampon correspondant à la tâche active, puis reboucle sur le premier test. Lorsque le test (741) sur l'activité d'une communication est affirmatif le superviseur (12) effectue un test (742) pour déterminer s'il 's'agit de lire ou d'écrire de l'information en mémoire. Si oui la requête d'écriture ou de lecture est mise dans la file à l'étape (131). Dans le cas contraire le superviseur détermine à l'étape (743) s'il s'agit d'une transmission ou d'une réception et dans le cas d'une transmission envoie par l'étape (744) le bloc d'information au serveur central. Dans le cas d'une réception le superviseur vérifie à l'étape (746) que les tampons du noyau sont libres d'accès et dans l'affirmative envoie un message au serveur central pour accepter la réception d'un bloc de donnée à l'étape (747), dans la négative, on reboucle sur les tests de départ. Après la réception d'un bloc, un contrôle d'erreur (748) est effectué du type de redondance cyclique CRC (cyclic redundant check). Le bloc est refusé à l'étape (740) en cas d'erreur, ou accepté dans le cas contraire, par l'envoi d'un message correspondant au serveur central signifiant que le bloc portant un numéro déterminé est refusé ou accepté, puis reboucle sur les tests de départ. dans le cas ou aucune tâche de niveau supérieur est active le superviseur effectue à l'étape (731 ou 701) le traitement des tâches d'interface ou de gestion, puis reboucle sur les tests de départ.

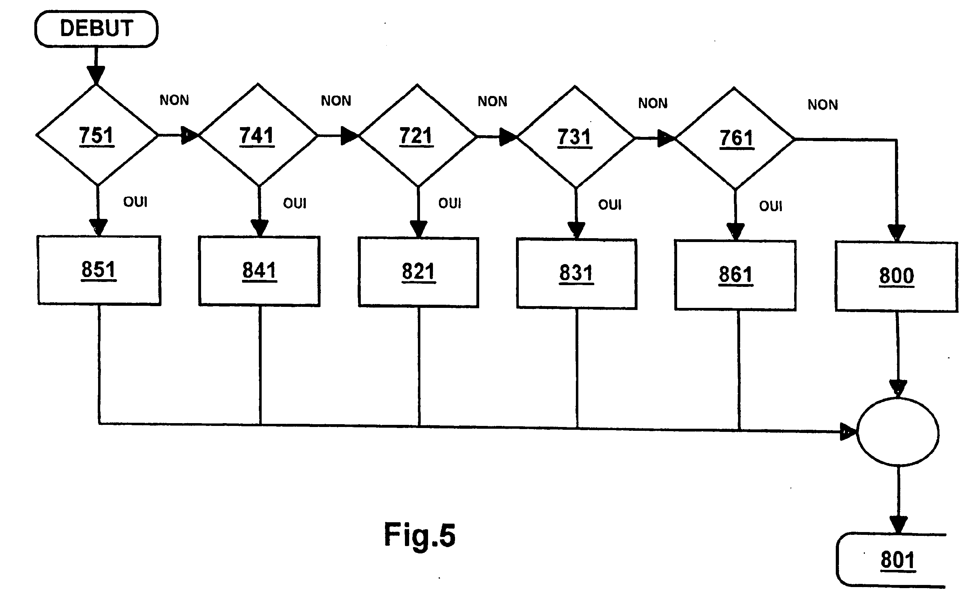

La détection d'une tâche active ou prête se fait comme représenté à la figure 5 par un test respectivement (721 à 761) sur chacun des tampons matériels ou logiciels respectifs (26) du disque dur, (36) d'interface, (46) de télécommunication, (56 et 57) de son, (66 et 67) de la vidéo qui sont associé avec chacun des circuits contrôleurs respectifs (2, 3, 4, 5, 6) de chacun des dispositifs matériels associés à l'unité centrale (1). Le test (721) permet de voir si les données sont présentes dans le tampon de mémoire d'entrée et sortie du disque, le test (731) permet de voir si des données sont présentes dans les tampons mémoires hardware ou software du dispositif d'interface client, le test (741) permet de voir si des données sont présentes dans les tampons en mémoire software ou hardware du dispositif télécommunication, le test (751) permet de déterminer si des données sont présentes dans le tampon en mémoire hardware ou software pour le son, le test (761) permet de voir si des données sont présentes dans les tampons mémoires hardware ou software du dispositif vidéo. Si un ou plusieurs de ces tampons sont remplis de données, le superviseur (12) positionne le ou les tampons de statut respectifs (821) pour le disque dur, (831) pour l'interface, (841) pour les télécommunications, (851) pour le son, (861) pour la vidéo correspondant au matériel à un état logique illustratif de l'activité. Dans le cas contraire les tampons de statut du superviseur sont remis à l'étape (800) à une valeur illustrative de l'inactivité.

Le statut d'opération du système est maintenu sur disque dur.

A chaque fois qu'un événement notable est enclenché, le système l'enregistre immédiatement sur le disque.

Ainsi, dans l'éventualité où surviendrait une panne électrique ou encore un bris d'équipement, le système sera en mesure de redémarrer exactement au même endroit où il a été interrompu.

Les événements qui engendrent la sauvegarde du statut d'opération sont :
- entrée d'argent (l'ajout de crédits) ;
- l'ajout d'une sélection dans la file d'attente ;
- la fin d'une sélection (changement de la sélection présentement en écoute).

Le fichier est dans un format machine seulement lisible par l'unité et ne prend pas plus de 64 octets.

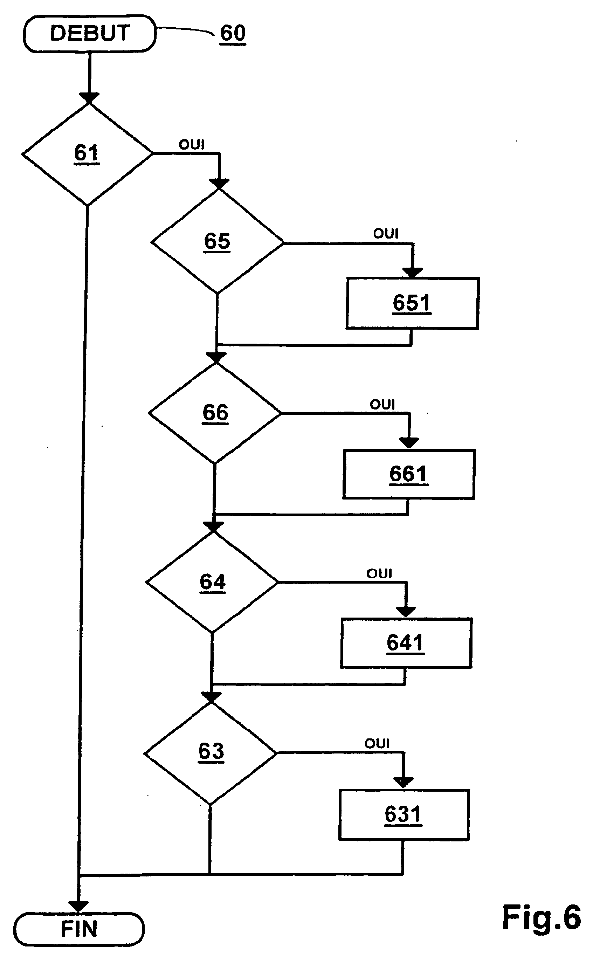

Le nombre et le type de tâches actives est indiqué au superviseur (12) par l'exécution du module de gestion des sélections SPMM dont le logigramme est représenté à la figure 6. La gestion effectuée par ce module commence par un test (61) pour déterminer si des sélections sont en attente dans la file.

Par la suite si le test (61) sur la file d'attente détermine que des sélections sont en attente, quand un client sélectionne un titre qu'il désire entendre, celui-ci est automatiquement écrit dans un fichier de file d'attente du système sur le disque dur.

Ainsi, chaque sélection faite ne sera jamais perdue en cas de panne électrique. Le système joue (reproduit) la sélection en entier avant de la retirer du fichier de la file d'attente.

Quand la sélection a été reproduite en entier, elle est retirée du fichier de file d'attente et est écrite dans le fichier de statistiques du système avec la date et l'heure d'achat, ainsi que la date et l'heure auxquelles elle a été exécutée.

Immédiatement après le transfert au fichier de statistiques de la sélection terminée, le système vérifie s'il y en a d'autres dans le fichier d'attente. S'il y en a une autre, le système commence immédiatement à jouer la sélection.

Le temps total écoulé entre la fin d'une sélection et le début de la suivante est inférieur à 0,5 seconde.

Il est possible d'allonger ce délai grâce à un bouton situé dans le panneau de contrôle du système.

Le traitement se poursuit par un test (65) pour déterminer si la sélection contient un scénario audio. Si oui, ce scénario est inscrit à l'étape (651) dans la file des tâches du superviseur (12). Si non, ou après cette inscription le traitement se poursuit par un test (66) pour déterminer si la sélection contient des images animées. Dans l'affirmative le scénario de la vidéo est inscrit à l'étape (661) dans la file des tâches du superviseur (12). Si non ou dans l'affirmative après cette inscription, le traitement se poursuit par un test (64) pour déterminer si la sélection contient un graphique fixe. Dans l'affirmative le scénario de la représentation graphique est inscrit à l'étape (641) dans la file des tâches du superviseur (12). Si non ou dans l'affirmative après cette inscription le traitement se poursuit par un test (63) pour déterminer si la sélection contient un scénario de publicité. Dans l'affirmative le scénario est inscrit à l'étape (631) dans la file des tâches du superviseur (12). Ainsi le superviseur (12) informé des tâches ouvertes peut gérer le déroulement des tâches simultanément.

Du fait, d'une part du mode de gestion des tâches en affectant la priorité la plus élevée à la tâche vidéo, d'autre part de la présence de tampons matériel ou logiciel affecté à chacune des tâches pour mémoriser temporairement des données et de la présence des tampons de statut relatif à chaque tâche, il a été possible de faire gérer toutes ces tâches par une seule unité centrale avec un système d'exploitation multitâche qui offre les possibilités d'un affichage vidéo c'est à dire d'images animées par opposition à une représentation graphique dans laquelle les informations à traiter sont moins complexes. Cette utilisation de présentation vidéo peut également se faire sans pénaliser le traitement du son par le fait que le circuit (5) de contrôleur de son comporte des tampons de taille suffisante pour mémoriser une quantité de données compressées suffisante afin de permettre pendant le traitement du son, le transfert de données vidéo vers un des tampons (66, 67) de la vidéo en attendant le transfert suivant de données de son.

De plus le système d'exploitation multitâche incluant une librairie contenant un ensemble d'outils et de services, permet de faciliter très significativement l'exploitation du fait de son intégration dans les moyens de mémorisation et de la grande flexibilité ainsi apportée. En particulier, il est, grâce à cela, possible de créer un univers multimédia en gérant de manière simple et efficace simultanément la reproduction de sons, l'affichage d'images ou de graphiques et l'animation vidéo. En outre, puisque les informations audiovisuelles sont numérisées et stockées dans les moyens de mémorisation, il est utilisé considérablement moins de place que pour un système de reproduction audiovisuelle traditionnel et par conséquent l'encombrement du système selon l'invention est nettement moindre. La base de données (16) est constituée comme représentée à la figure 7 de plusieurs bases.

Une première (161) portant sur les titres des morceaux audiovisuel, une deuxième (162) sur les artistes, une troisième (163) sur les étiquettes (LABEL), une quatrième (164) sur les albums, une cinquième (165) sur les royalties. La première base (161) comporte une première information (1611) donnant le titre du morceau, une deuxième information (1612) donnant l'identification du produit , cette identification étant unique. Une troisième information (1613) permet de connaître la catégorie à savoir jazz, classique, variété etc. Une quatrième information (1614) permet de connaître la date de la mise à jour. Une cinquième information (1615) permet de connaître la longueur en seconde nécessaire pour exécuter le morceau.

La sixième information (1616) est un lien avec la base des royalties. La septième information (1617) est un lien avec l'album. La huitième information(1618) est un lien avec les étiquettes LABELS. La neuvième information (1619) donne le coût d'acquisition pour le gérant du juke-box ;

La dixième information (1620) donne le coût des royalties pour chaque exécution du morceau;

La onzième information (1610) est un lien avec la base de donnée des artistes. Ce lien est constitué par l'identité de l'artiste. La base de donnée de l'artiste comporte outre l'identité de l'artiste, constitué par l'information (1621), une deuxième information (1622) constituée par le nom de l'artiste ou le nom du groupe. La base des étiquettes LABELS comporte une première information (1631) constituée par l'identité de l'étiquette LABEL établissant le lien avec la huitième information (1618) de la base de titre et une deuxième information (1632) constituée par le nom de l'étiquette LABEL. La base des informations d'album comporte une première information qui est l'identité de l'album (1641) qui constitue le lien avec la septième information (1617) de la base titre. Une deuxième information (1642) constitue le titre, une troisième information (1643) est constituée par la date de mise à jour de l'album, et une quatrième information (1644) est constituée par l'identité de l'étiquette LABEL. La base royalty est constituée d'une première information (1651) donnant l'identité des royalties et correspond à la sixième information (1616) de la base titre. Une deuxième information (1652) constitue le nom de la personne recevant les royalties. Une troisième information (1653) est constituée par l'adresse d'expédition des royalties. Une quatrième information (1654) est constituée par le téléphone et une cinquième (1655) est constituée par le numéro de fax éventuel.

On comprend aisément que cette base de données (16) permet donc de tenir à jour les coûts pour le gérant, des achats de chansons et les royalties à payer à chacun des artistes ou groupes d'artistes dont les chansons ou les vidéos sont interprétées, et d'afficher également les statistiques concernant l'exploitation des chansons pour faciliter pour le gérant la sélection de nouveaux titres en éliminant par exemple les titres les moins rentables.

Toutes modifications à la portée de l'homme de métier fait également partie de l'invention. Ainsi lorsqu'il est question de tampons, il est rappelé que ceux-ci peuvent être présents soit physiquement sur le circuit auquel ils sont affectés soit réalisés par logiciel en réservant des emplacements de mémorisation dans la mémoire du système.

## Revendications

1. Système de reproduction audiovisuelle déclenché par paiement de redevances associé à un dispositif de paiement, comprenant un dispositif à microprocesseur le dispositif à microprocesseur comportant d'une part des moyens de mémorisation de masse, pour stocker, sous forme numérique comprimée, des informations visuelles et sonores à exploiter, et d'autre part commande et gère par l'intermédiaire d'interfaces des moyens numériques de visualisation et des moyens numériques de reproduction sonore permettant de créer un univers multimédia, **caractérisé en ce que** les moyens numériques de visualisation comprennent un moniteur vidéo ou écran de télévision et un écran tactile, un programme d'interface réagissant à des événements extérieurs et les traduisant, pour un système d'exploitation multitâche; comme des événements déclenchant, par l'intermédiaire d'un module graphique d'une librairie d'outils et de services intégrés, l'affichage d'un écran permettant la modification de paramètres de fonctionnement du système de reproduction, les événements extérieurs étant constitués d'au moins un événement d'appui (down), traduisant la coïncidence de l'emplacement d'un doigt d'utilisateur sur l'écran tactile avec la position d'au moins une représentation affichée par le module graphique, et au moins un événement de relâchement (up), traduisant l'enlèvement du doigt de l'écran tactile pour déclencher la modification d'au moins un paramètre en provoquant une mémorisation de ce paramètre dans les moyens de mémorisation.

2. Système de reproduction audiovisuelle déclenché par paiement de redevance accocié à un dispositif de paiement, comportant un dispositif à microprocesseur le dispositif à microprocesseur comportant d'une part des moyens de mémorisation de masse, pour stocker, sous forme numérique comprimée, des informations visuelles et sonores à exploiter, et d'autre part commande et gère, par l'intermédiaire d'interfaces, des moyens numériques de visualisation et des moyens numériques de reproduction sonore permettant de créer un univers multimédia, **caractérisé en ce que** le système intègre, par l'intermédiaire d'une interface (158), un moyen de télécommunications (4,41), pour connecter le système à un réseau de distribution d'informations audiovisuelles, la fonction de télécommunications étant gérée par un système d'exploitation multitâche inclus dans une librairie d'outils et de services intégrés, et **en ce que** les moyens numériques de visualisation comprennent un moniteur vidéo ou écran de télévision et un écran tactile, un programme d'interface réagissant à des événements extérieurs et les traduisant, pour le système d'exploitation multitâche, comme des événements déclenchant, par l'intermédiaire d'un module graphique de la librairie d'outils et de services intégrés, un affichage d'un tableau de balayage d'une base de données de titres pour permettre, d'une part, l'exploration de la base de données contenant les titres disponibles, et, d'autre part, la commande d'une sélection des titres au travers du réseau de distribution d'informations audiovisuelles, les événements extérieurs étant constitués d'au moins un événement d'appui (down), traduisant la coïncidence de l'emplacement d'un doigt d'utilisateur sur l'écran tactile avec la position d'au moins une représentation affichée par le module graphique, et au moins un événement de relâchement (up), traduisant l'enlèvement du doigt de l'écran tactile pour déclencher le lancement d'une commande, associée à la représentation affichée et éxécutée par le système d'exploitation multitâche.

3. Système de reproduction audiovisuelle déclenché par paiement de redevances associé à un dispositif de paiement, comprenant un dispositif à microprocesseur le dispositif à microprocesseur comportant d'une part des moyens de mémorisation de masse, pour stocker, sous forme numérique comprimée les informations visuelles et sonores à exploiter, et d'autre part commande et gère, par l'intermédiaire d'interfaces, à des moyens numériques de visualisation et des moyens numériques de reproduction sonore permettant de créer un univers multimédia, **caractérisé en ce que** les moyens numériques de visualisation comprennent un moniteur vidéo ou écran de télévision et un écran tactile, un programme d'interface réagissant à des événements extérieurs et les traduisant pour un système d'exploitation multitâche, comme des événements déclenchant, par l'intermédiaire d'un module graphique d'une librairie d'outils et de services intégrés, l'affichage d'un tableau de statistiques pour des estimations et des calculs statistiques relatifs aux titres, les événements extérieurs étant constitués d'au moins un événement d'appui (down), traduisant la coïncidence de l'emplacement d'un doigt d'un utilisateur sur l'écran tactile avec la position d'au moins une représentation affichée par le module graphique, et au moins un événement de relâchement (up), traduisant l'enlèvement du doigt de l'écran tactile pour déclencher l'action souhaitée par l'utilisateur, correspondant à une fonction associée à la représentation coïncidant avec l'emplacement du doigt.

4. Système de reproduction audiovisuelle selon l'une des revendications 1 à 3, **caractérisé en ce que** l'écran tactile et le programme d'interface réagissant aux événements extérieurs déclenche la modification du déroulement de l'un des modules de programme d'interface homme machine.

5. Système de reproduction audiovisuelle selon l'une des revendications 1 à 4, **caractérisé en ce que** la librairie d'outils et de services comporte une pluralité de modules d'affichage graphique constituant, à l'aide de l'interface de l'écran tactile, une pluralité de tableaux de contrôle, parmi lesquels un premier tableau de sélection de titres se déroulant pour aider à la recherche et à la sélection d'un titre désiré, et un second tableau de contrôle de gestion de paramètres physiques du juke-box.

6. Système de reproduction audiovisuelle selon l'une des revendications 1 à 5, **caractérisé en ce qu'**un module de mode de gestion permet d'enregistrer des paramètres d'exploitation du système dans un fichier, mémorisé sur un disque dur dans un format machine non lisible pour un utilisateur, les informations sauvegardées sur le disque étant relues à chaque démarrage du système.

7. Système de reproduction audiovisuelle selon l'une des revendications 1 à 6, **caractérisé en ce qu'**un fichier de paramètres d'exploitation du système permet de fixer le prix d'un titre ou le nombre de titres pour une valeur prédéterminée, le délai d'inactivité avant d'enclencher un mode promotionnel visuel, le délai d'inactivité avant d'enclencher une source auxiliaire telle que la radio par exemple, le délai d'inactivité avant d'enclencher un mode d'échantillonnage des sélections, l'endroit déterminé en secondes à partir du début où le système pourra démarrer l'échantillonnage d'une sélection, la durée en secondes de l'échantillon.

8. Système de reproduction audiovisuelle selon l'une des revendications 1 à 7, **caractérisé en ce qu'**un module de commande système (CM) comporte un module de représentation graphique dans lequel un ensemble de curseurs sont représentés dans une fenêtre, chacun des curseur étant associé avec l'un des paramètres d'une fonction physique contrôlée, le module d'interface de l'écran tactile du module graphique interprétant la mise en coïncidence de l'emplacement du doigt sur l'écran tactile avec la position d'une représentation, et le déplacement du doigt à partir de cette position sur l'écran tactile, comme la traîne de la souris pour un logiciel d'exploitation, la dernière position de la représentation déplacée pendant l'événement étant mémorisée par le système et utilisée par celui-ci pour régler un paramètre physique correspondant du système.

9. Système de reproduction audiovisuelle selon la revendication 8, **caractérisé en ce que** un premier curseur est associé à un niveau de volume maître ;
un deuxième curseur est associé à un niveau de volume du juke-box ;
un troisième curseur est associé à un niveau de volume du microphone ;
un quatrième curseur est associé à un niveau de volume d'une entrée auxiliaire (fonction Tuner, radio) ;
un cinquième curseur est associé à un niveau de contrôle des basses ;
un sixième curseur est associé à un niveau de contrôle des aigus ;
un septième curseur est associé à un réglage de balance.

10. Système de reproduction audiovisuelle selon l'une des revendications 1 à 9, **caractérisé en ce que** la librairie d'outils comporte une première base de données de titres disponibles sur le système et une deuxième base de données de titres disponibles pour commande par un gérant du système, la sélection des données de la base se faisant en coïncidence des événements extérieurs enregistrés par le module d'interface associé au module graphique utilisé.

11. Système de reproduction audiovisuelle selon l'une des revendications 1 à 10, **caractérisé en ce qu'**un module graphique de mode de sélection et d'exploration client permet, par l'affichage d'une fenêtre comportant une pluralité de boutons, de sélectionner, parmi les titres disponibles dans une base de données, ceux correspondant à un type déterminé de musique.

12. Système de reproduction audiovisuelle selon l'une des revendications 1 à 11, **caractérisé en ce que** le système d'exploitation multitâche qui le gère comporte un noyau associant, à chacun des moyens périphériques, une tâche et affectant la priorité la plus élevée à la tâche visualisation et une priorité de niveau deux à la tâche son, au moins un tampon (66, 67 respectivement 56, 57) de stockage temporaire de données à décomprimer pour les moyens respectifs de visualisation (6) et de reproduction sonore (5), pour permettre le traitement de l'information transférée à l'un des moyens pendant le traitement d'un transfert vers un autre moyen par le système d'exploitation, et un module superviseur du système d'exploitation utilise un tampon de statut positionné à une valeur représentative de l'activité d'une tâche dès qu'un des tampons de stockage temporaire contient des données.

13. Système de reproduction audiovisuelle selon l'une des revendications 1 à 12, **caractérisé en ce que** le système intègre, par l'intermédiaire d'une interface (158), un moyen de télécommunications (4,41) pour connecter le système, à un réseau de distribution d'informations audiovisuelles, la fonction de télécommunications étant gérée par le système d'exploitation multitâche inclus dans la librairie d'outils et de services intégrée dans les moyens de mémorisation avec une priorité de niveau trois et un tampon temporaire (26) de stockage des données à transférer et un tampon (841) indicatif du statut de cette tâche.

14. Système de reproduction audiovisuelle selon l'une des revendications 1 à 13, **caractérisé en ce que** le système d'exploitation comporte un module de résolution des priorités (11) qui en fonction des priorités affectées aux tâches déclarées actives va accuser réception de la requête d'une tâche ou répondre par un signal d'occupation, un module superviseur (12) qui en fonction des tâches déclarées actives et de la disponibilité des ressources matérielles suffisantes remplit une file d'attente de requêtes de mémorisation.

15. Système de reproduction audiovisuelle selon l'une des revendications 1 à 14, **caractérisé en ce qu'**un tampon temporaire (36) de stockage des données provenant d'une interface homme machine et un tampon (831) indicatif du statut de cette tâche d'interface homme machine est associé à une tâche d'interface (73) telle que la sélection de zones sur l'écran tactile, chaque zone correspondant à un choix parmi les informations affichées sur les moyens de visualisation.

## Patentansprüche

1. System zur audiovisuellen Wiedergabe, das durch die Bezahlung von Gebühren gestartet wird und dem eine Bezahlvorrichtung zugeordnet ist, mit einer Mikroprozessorvorrichtung, die einerseits Massenspeichermittel umfasst, um in komprimierter digitaler Form zu nutzende Bild- und Toninformationen zu speichern, und andererseits über Schnittstellen digitale Anzeigemittel und digitale Klangwiedergabemittel steuert und verwaltet, um die Schaffung eines Multimedia-Universums zu ermöglichen, **dadurch gekennzeichnet, dass** die digitalen Anzeigemittel einen Videomonitor oder einen Fernsehschirm und einen Tastschirm umfassen, wobei eine Programmschnittstelle auf externe Ereignisse anspricht und sie für ein Multitasking-Betriebssystem in Ereignisse überführt, die über ein Graphikmodul einer Bibliothek für integrierte Werkzeuge und Dienste die Anzeige eines Bildschirms starten, der die Modifikation von Betriebsparametern des Wiedergabesystems ermöglicht, wobei die externen Ereignisse gebildet sind aus wenigstens einem Anstoßereignis (down), das die Übereinstimmung des Ortes eines Fingers eines Anwenders auf dem Berührungsschirm mit der Position wenigstens einer durch das Graphikmodul angezeigten Darstellung angibt, und wenigstens einem Aufgabeereignis (up), das das Abheben des Fingers vom Berührungsschirm angibt, um die Modifikation wenigstens eines Parameters zu starten, indem eine Speicherung dieses Parameters in den Speichermitteln hervorgerufen wird.

2. System zur audiovisuellen Wiedergabe, das durch die Bezahlung von Gebühren gestartet wird und dem eine Bezahlvorrichtung zugeordnet ist, mit einer Mikroprozessorvorrichtung, die einerseits Massenspeichermittel umfasst, um in komprimierter digitaler Form zu nutzende Bild- und Toninformationen zu speichern, und andererseits über Schnittstellen digitale Anzeigemittel und digitale Klangwiedergabemittel steuert und verwaltet, was die Erzeugung eines Multimedia-Universums ermöglicht, **dadurch gekennzeichnet, dass** das System über eine Schnittstelle (158) ein Telekommunikationsmittel (4, 41) integriert, um das System an ein Netz zur Verteilung von audiovisuellen Informationen anzuschließen, wobei die Telekommunikationsfunktion durch ein Multitasking-Betriebssystem verwaltet wird, das in einer Bibliothek für integrierte Werkzeuge und Dienste enthalten ist, und dass die digitalen Anzeigemittel einen Videomonitor oder einen Fernsehschirm und einen Berührungsschirm umfassen, wobei ein Schnittstellenprogramm auf externe Ereignisse anspricht und sie für das Multitasking-Betriebssystem in Ereignisse überführt, die über ein Graphikmodul der Bibliothek für integrierte Werkzeuge und Dienste eine Anzeige einer Abtasttafel einer Titel-Datenbank starten, um einerseits die Abtastung der die verfügbaren Titel enthaltenden Datenbank und andererseits die Steuerung einer Auswahl der Titel über das Netz zur Verteilung audiovisueller Informationen zu ermöglichen, wobei die externen Ereignisse gebildet sind aus wenigstens einem Anstoßereignis (down), das die Übereinstimmung des Ortes eines Fingers eines Anwenders auf dem Berührungsschirm mit der Position wenigstens einer durch das Graphikmodul angezeigten Darstellung angibt, und wenigstens einem Aufgabeereignis (up), das das Abheben des Fingers von dem Berührungsschirm angibt, um die Auslösung eines der angezeigten Darstellung zugeordneten und von dem Multitasking-Betriebssystem ausgeführten Befehls zu starten.

3. System zur audiovisuellen Wiedergabe, das durch die Bezahlung von Gebühren gestartet wird und dem eine Bezahlvorrichtung zugeordnet ist, mit einer Mikroprozessorvorrichtung, die einerseits Massenspeichermittel enthält, um in komprimierter digitaler Form zu nutzende Bild- und Toninformationen zu speichern, und andererseits über Schnittstellen digitale Anzeigemittel und digitale Klangwiedergabemittel steuert und verwaltet, was die Erzeugung eines Multimedia-Universums emöglicht, **dadurch gekennzeichnet, dass** die digitalen Anzeigemittel einen Videomonitor oder einen Fernsehschirm und einen Berührungsschirm umfassen, wobei ein Schnittstellenprogramm auf externe Ereignisse anspricht und sie für ein Multitasking-Betriebssystem in Ereignisse überführt, die über ein Graphikmodul einer Bibliothek für integrierte Werkzeuge und Dienste die Anzeige einer Statistiktabelle für statistische Schätzungen und Berechnungen bezüglich der Titel starten, wobei die externen Ereignisse gebildet sind aus wenigstens einem Anstoßereignis (down), das die Übereinstimmung des Ortes eines Fingers eines Anwenders auf dem Berührungsschirm mit der Position wenigstens einer durch das Graphikmodul angezeigten Darstellung angibt, und wenigstens einem Aufgabeereignis (up), das das Abheben des Fingers von dem Berührungsschirm angibt, um die von dem Anwender gewünschte Aktion zu starten, die einer Funktion entspricht, die der mit dem Ort des Fingers übereinstimmenden Darstellung zugeordnet ist.

4. System zur audiovisuellen Wiedergabe nach einem der Ansprüche 1 bis 3, **dadurch gekennzeichnet, dass** der Berührungsschirm und das Schnittstellenprogramm, das auf externe Ereignisse anspricht, die Abwandlung des Ablaufs eines der Programmmodule der Mensch-Maschine-Schnittstelle startet.

5. System zur audiovisuellen Wiedergabe nach einem der Ansprüche 1 bis 4, **dadurch gekennzeichnet, dass** die Werkzeug- und Dienstbibliothek mehrere Graphikanzeigemodule umfasst, die mit Hilfe der Schnittstelle des Berührungsschirm mehrere Steuertabellen bilden, unter denen sich eine erste Titelauswahltabelle, die angezeigt wird, um die Suche und die Auswahl eines gewünschten Titels zu unterstützen, und eine zweite Steuertabelle für die Verwaltung physikalischer Parameter der Jukebox befinden.

6. System zur audiovisuellen Wiedergabe nach einem der Ansprüche 1 bis 5, **dadurch gekennzeichnet, dass** ein Verwaltungsmodus-Modul ermöglicht, Betriebsparameter des Systems in eine Datei einzutragen, die auf einer Festplatte in einem für einen Anwender nicht lesbaren Maschinenformat gespeichert ist, wobei die auf der Platte gesicherten Informationen bei jedem Hochfahren des Systems erneut gelesen werden.

7. System zur audiovisuellen Wiedergabe nach einem der Ansprüche 1 bis 6, **dadurch gekennzeichnet, dass** eine Betriebsparameter-Datei des Systems ermöglicht, den Preis eines Titels auf einen vorgegebenen Wert, die Inaktivitätsverzögerung vor dem Einschalten eines visuellen verkaufsfördernden Modus, die Inaktivitätsverzögerung vor dem Einschalten einer Hilfsquelle wie beispielsweise des Radios, die Inaktivitätsverzögerung vor dem Einschalten eines Auswahlabtastmodus, den Ort, der ab dem Beginn, bei dem das System die Abtastung einer Auswahl auslösen kann, in Sekunden gemessen wird, und die Dauer in Sekunden der Abtastung zu fixieren.

8. System zur audiovisuellen Wiedergabe nach einem der Ansprüche 1 bis 7, **dadurch gekennzeichnet, dass** ein Befehlssystem-Modul (cm) ein Graphikdarstellungsmodul umfasst, in dem eine Gesamtheit von Cursorn in einem Fenster dargestellt ist, wobei jeder der Cursor einem der Parameter einer gesteuerten physikalischen Funktion zugeordnet ist, wobei das Schnittstellenmodul des Berührungsschirms des Graphikmoduls die Herstellung einer Übereinstimmung zwischen dem Ort des Fingers auf dem Berührungsschirm und der Position einer Darstellung und die Verschiebung des Fingers ausgehend von dieser Position auf dem Berührungsschirm als Spur der Maus für eine Betriebssystem-Software interpretiert, wobei die letzte Position der während des Ereignisses verschobenen Darstellung von dem System gespeichert und von ihm verwendet wird, um einen dem System entsprechenden physikalischen Parameter zu steuern.

9. System zur audiovisuellen Wiedergabe nach Anspruch 8, **dadurch gekennzeichnet, dass** ein erster Cursor einem Master-Lautstärkepegel zugeordnet ist;
ein zweiter Cursor einem Jukebox-Lautstärkepegel zugeordnet ist;
ein dritter Cursor einem Mikrophon-Lautstärkepegel zugeordnet ist;
ein vierter Cursor einem Hilfseingang-Lautstärkepegel (Tuner- oder Radiofunktion) zugeordnet ist;
ein fünfter Cursor einem Bass-Steuerpegel zugeordnet ist;
ein sechster Cursor einem Höhen-Steuerpegel zugeordnet ist;
ein siebter Cursor einer Balance-Steuerung zugeordnet ist.

10. System zur audiovisuellen Wiedergabe nach einem der Ansprüche 1 bis 9, **dadurch gekennzeichnet, dass** die Werkzeugbibliothek eine erste Datenbank von Titeln, die in dem System verfügbar sind, und eine zweite Datenbank von Titeln, die auf Bestellung von einem Administrator des Systems verfügbar sind, umfasst, wobei die Auswahl der Daten der Bank in Übereinstimmung mit externen Ereignissen erfolgt, die von dem Schnittstellenmodul, das dem verwendeten Graphikmodul zugeordnet ist, eingetragen werden.

11. System zur audiovisuellen Wiedergabe nach einem der Ansprüche 1 bis 10, **dadurch gekennzeichnet, dass** ein Graphikmodul für den Auswahl- und Clientnutzungsmodus durch Anzeige eines Fensters, das mehrere Schalter enthält, unter in einer Datenbank verfügbaren Titeln die Auswahl jener Titel, die einem bestimmten Musiktyp entsprechen, emlöglicht.

12. System zur audiovisuellen Wiedergabe nach einem der Ansprüche 1 bis 11, **dadurch gekennzeichnet, dass** das Multitasking-Betriebssystem, das es verwaltet, umfasst: einen Kern, der jedem der Peripheriemittel einen Task zuordnet und die höchste Priorität dem Anzeigetask zuweist und eine Priorität zweiter Ebene dem Ton-Task zuweist, wenigstens einen Pufferspeicher (66, 67 bzw. 56, 57) für die temporäre Speicherung von zu dekomprimierenden Daten für die Anzeigemittel (6) bzw. die Klangwiedergabemittel (5), um die Verarbeitung von Informationen, die an eines der Mittel übertragen werden, während der Verarbeitung einer Übertragung zu einem anderen Mittel durch das Betriebssystem zu ermöglichen, und ein Überwachungsmodul des Betriebssystems, das einen Statuspufferspeicher verwendet, der auf einen Wert gesetzt ist, der die Aktivität eines Tasks darstellt, sobald einer der Pufferspeicher zur temporären Speicherung Daten enthält.

13. System zur audiovisuellen Wiedergabe nach einem der Ansprüche 1 bis 12, **dadurch gekennzeichnet, dass** das System über eine Schnittstelle (158) ein Telekommunikationsmittel (4, 41), um das System an ein Netz zur Verteilung audiovisueller Informationen anzuschließen, wobei die Telekommunikationsfunktion durch das Multitasking-Betriebssystem, das in der in die Speichermittel integrierten Werkzeug- und Dienstbibliothek enthalten ist, mit einer Priorität dritter Ebene verwaltet wird, und einen temporären Puffer (26) zum Speichern von zu übertragenden Daten sowie einen Puffer (841), der den Status dieses Tasks angibt, integriert.

14. System zur audiovisuellen Wiedergabe nach einem der Ansprüche 1 bis 13, **dadurch gekennzeichnet, dass** das Betriebssystem umfasst: ein Modul (11) zum Auflösen von Prioritäten, das in Abhängigkeit von den Prioritäten, die den als aktiv erklärten Tasks zugewiesen sind, den Empfang der Anforderung eines Tasks bestätigt oder durch ein Belegtsignal antwortet, und ein Überwachungsmodul (12), das in Abhängigkeit von den als aktiv erklärten Tasks und von der Verfügbarkeit ausreichender Hardware-Betriebsmittel eine Warteschlange von Speicheranforderungen füllt.

15. System zur audiovisuellen Wiedergabe nach einem der Ansprüche 1 bis 14, **dadurch gekennzeichnet, dass** einem Schnittstellen-Task (73) wie etwa der Auswahl von Zonen auf dem Berührungsschirm ein temporärer Pufferspeicher (36) zum Speichern von Daten, die von einer Mensch-Maschine-Schnittstelle stammen, und ein Pufferspeicher (831), der den Status dieses Tasks der Mensch-Maschine-Schnittstelle angibt, zugeordnet sind, wobei jede Zone einer Wahl unter den auf den Anzeigemitteln angezeigten Informationen entspricht.

## Claims

1. Audiovisual reproduction system triggered by the payment of royalties associated with a payment device, comprising a microprocessor device, the microprocessor device comprising on the one hand mass storage means for storing, in compressed digital form, the visual and sound information to be used and, on the other hand, controls and manages, via interfaces, digital display means and digital sound-reproduction means making it possible to create a multimedia environment, **characterised in that** the digital display means comprise a video monitor or television screen and a touch screen, an interface program reacting to external events and translating them, for a multitasking operating system, as events triggering, via a graphic module of a library of integrated services and tools, the display of a screen permitting the modification of operating parameters of the reproduction system, the external events being constituted by at least one pressing (down) event, translating the coincidence of the user placing a finger on the touch screen with the position of at least one illustration displayed by the graphic module, and at least one release (up) event, translating the removal of the finger from the touch screen in order to trigger the modification of at least one parameter while causing this parameter to be stored in the storage means.

2. Audiovisual reproduction system triggered by the payment of royalties associated with a payment device, comprising a microprocessor device, the microprocessor device comprising on the one hand mass storage means for storing, in compressed digital form, the visual and sound information to be used and, on the other hand, controls and manages, via interfaces, digital display means and digital sound-reproduction means making it possible to create a multimedia environment, **characterised in that** the system incorporates, via an interface (158), a telecommunications means (4, 41), in order to connect the system to an audiovisual information distribution network, the telecommunications function being managed by a multitasking operating system included in a library of integrated services and tools, and **in that** the digital display means comprise a video monitor or television screen and a touch screen, an interface program reacting to external events and translating them, for the multitasking operating system, as events triggering, via a graphic module of the library of integrated services and tools, a display of a scanner table of a database of titles in order to permit, on the one hand, the browsing of the database containing the available titles and, on the other hand, the control to select titles through the audiovisual information distribution network, the external events being constituted by at least one pressing (down) event, translating the coincidence of the user placing a finger on the touch screen with the position of at least one illustration displayed by the graphic module, and at least one release (up) event, translating the removal of the finger from the touch screen in order to trigger the launching of a command, associated with the illustration displayed and executed by the multitasking operating system.

3. Audiovisual reproduction system triggered by the payment of royalties associated with a payment device, comprising a microprocessor device, the microprocessor device comprising on the one hand mass storage means for storing, in compressed digital form, the visual and sound information to be used and, on the other hand, controls and manages, via interfaces, digital display means and digital sound-reproduction means making it possible to create a multimedia environment, **characterised in that** the digital display means comprise a video monitor or television screen and a touch screen, an interface program reacting to external events and translating them, for a multitasking operating system, as events triggering, via a graphic module of a library of integrated services and tools, the display of a statistics panel for statistical calculations and estimates relating to the titles, the external events being constituted by at least one pressing (down) event, translating the coincidence of the user placing a finger on the touch screen with the position of at least one illustration displayed by the graphic module, and at least one release (up) event, translating the removal of the finger from the touch screen in order to trigger the action desired by the user, corresponding to a function associated with the illustration coinciding with the placing of the finger.

4. Audiovisual reproduction system according to one of Claims 1 to 3, **characterised in that** the touch screen and the interface program reacting to external events triggers the modification of the progress of one of the program modules of the man/machine interface.

5. Audiovisual reproduction system according to one of Claims 1 to 4, **characterised in that** the library of tools and services comprises a plurality of graphic display modules constituting, with the aid of the interface of the touch screen, a plurality of control panels, among which a first title selection panel scrolling in order to assist with the searching and selection of a desired title, and a second control panel for managing the physical parameters of the jukebox.

6. Audiovisual reproduction system according to one of Claims 1 to 5, **characterised in that** a management mode module makes it possible to record operating parameters of the system in a file stored on a hard disk in a machine format that cannot be read by a user, the information saved to the disk being reread each time the system starts up.

7. Audiovisual reproduction system according to one of Claims 1 to 6, **characterised in that** a file of operating parameters for the system makes it possible to set the price of a title or the number of titles for a predetermined value, the timeout before starting up a visual promotional mode, the timeout before starting up an auxiliary source such as the radio for example, the timeout before starting a selection sampling mode, the location determined in seconds from the beginning where the system will be able to start sampling a selection, and the duration in seconds of the sample.

8. Audiovisual reproduction system according to one of Claims 1 to 7, **characterised in that** a system control module (CM) comprises a graphic display module in which a set of cursors is represented in a window, each of the cursors being associated with one of the parameters of a controlled physical function, the interface module of the touch screen of the graphic module interpreting the coincidence of the finger being placed on the touch screen with the position of an illustration, and the displacement of the finger from this position over the touch screen, as the dragging of the mouse for the operating software, the last position of the illustration displaced during -the event being stored by the system and used by it to adjust a corresponding physical parameter of the system.

9. Audiovisual reproduction system according to Claim 8, **characterised in that** a first cursor is associated with a master volume level;
a second cursor is associated with a volume level of the jukebox;
a third cursor is associated with a volume level of the microphone;
a fourth cursor is associated with a volume level of an auxiliary input (tuner function, radio);
a fifth cursor is associated with a bass control level;
a sixth cursor is associated with a treble control level;
a seventh cursor is associated with a balance control.

10. Audiovisual reproduction system according to one of Claims 1 to 9, **characterised in that** the tool library comprises a first database of titles available on the system and a second database of titles available for ordering by the system manager, the data in the database being selected when there is coincidence of the external events recorded by the interface module associated with the graphic module used.

11. Audiovisual reproduction system according to one of Claims 1 to 10, **characterised in that** a graphic module for customer browsing and selection mode makes it possible, through the display of a window comprising a plurality of buttons, to select from the titles available in the database those corresponding to a specific type of music.

12. Audiovisual reproduction system according to one of Claims 1 to 11, **characterised in that** the multitasking operating system that manages it comprises a kernel associating a task with each of the peripheral means and assigning the highest priority to the display task and a level two priority to the sound task, at least one temporary storage buffer (66, 67 or 56, 57) for data to be decompressed for the respective display (6) and sound reproduction (5) means, in order to allow the processing of the information transferred to one of the means during the processing of a transfer to another means by the operating system and a supervisor module of the operating system uses a status buffer positioned at a value representing the activity of a task when one of the temporary storage buffers contains data.

13. Audiovisual reproduction system according to one of Claims 1 to 12, **characterised in that** the system incorporates, via an interface (158), a telecommunications means (4, 41) for connecting the system to an audiovisual information distribution network, the telecommunications function being managed by the multitasking operating system included in the library of tools and services integrated into the storage means with a level three priority and a temporary buffer (26) for storing the data to be transferred and a buffer (841) indicating the status of this task.

14. Audiovisual reproduction system according to one of Claims 1 to 13, **characterised in that** the operating system comprises a priority resolution module (11) which, depending on the priorities assigned to the declared active tasks, will acknowledge receipt of the request for a task or will respond with a busy signal, a supervisor module (12) which, depending on the declared active tasks and the availability of sufficient hardware resources, fills a queue with storage requests.

15. Audiovisual reproduction system according to one of Claims 1 to 14, **characterised in that** a temporary buffer (36) for storing the data from a man/machine interface and a buffer (831) indicating the status of this man/machine interface task is associated with an interface task (73) such as the selection of zones on the touch screen, each zone corresponding to one choice from among the information displayed on the display means.
